# FASCICULE DE BREVET EUROPEEN

(11) **EP 3 832 947 B1**
(45) Date de publication et mention de la délivrance du brevet: **26.01.2022**
(21) Numéro de dépôt: 20209560.0
(22) Date de dépôt: 24.11.2020
(51) Int. Cl.: H04L 9/06, H04L 9/32, G09C 1/00, G06F 21/64, G06F 21/78

(54) **PROCÉDÉ D' EXÉCUTION D'UN PROGRAMME D'ORDINATEUR PAR UN APPAREIL ÉLECTRONIQUE**
VERFAHREN ZUR AUSFÜHRUNG EINES COMPUTERPROGRAMMS DURCH EIN ELEKTRONISCHES GERÄT
METHOD FOR EXECUTING A COMPUTER PROGRAM BY AN ELECTRONIC APPARATUS

(30) Priorité: 04.12.2019 FR 1913764
(43) Date de publication de la demande: 09.06.2021
(73) Titulaire: Commissariat à l'Energie Atomique et aux Energies Alternatives, 75015 Paris (FR)
(72) Inventeur: SAVRY, Olivier, 38054 Grenoble Cedex 9 (FR); HISCOCK, Thomas, 38054 Grenoble Cedex 09 (FR)
(74) Mandataire: INNOV-GROUP

(56) Documents cités:
- FR-A1- 3 071 082
- US-A1- 2016 277 373
- US-A1- 2019 362 081

## Description

L'invention concerne un procédé d'exécution d'un programme d'ordinateur par un appareil électronique comportant un microprocesseur, une mémoire déchiffrée, une mémoire chiffrée et un module matériel de sécurisation.

L'invention concerne également :
- un code binaire apte à être exécuté par un microprocesseur en mettant en œuvre ce procédé,
- un module matériel de sécurisation et un compilateur pour la mise en œuvre de ce procédé.

Pour des raisons de sécurité, il est connu d'enregistrer les données traitées, lors de l'exécution d'un programme d'ordinateur, sous forme chiffrée dans une mémoire. Par la suite, la mémoire ou partie de mémoire qui contient ces données chiffrées est appelée « mémoire chiffrée ». Dans ce cas, à chaque fois qu'une donnée doit être chargée dans le microprocesseur pour y être traitée, la donnée chiffrée est d'abord transférée de la mémoire chiffrée vers une mémoire déchiffrée. Par la suite, on appelle « mémoire déchiffrée », une mémoire dans laquelle les données sont enregistrées sous forme déchiffrée. Lors de ce transfert, l'intégrité de la donnée à charger est d'abord vérifiée. Seulement si l'intégrité de la donnée est confirmée, alors la donnée est déchiffrée puis enregistrée dans la mémoire déchiffrée.

Dans ce contexte, des données sont également transférées, en sens inverse, de la mémoire déchiffrée vers la mémoire chiffrée pour y être enregistrées. Lors de ce transfert, la donnée est chiffrée, puis le code d'authentification permettant de vérifier son intégrité est calculé. Enfin, la donnée chiffrée et son code d'authentification sont enregistrés dans la mémoire chiffrée.

Les opérations de vérification de l'intégrité d'une donnée et de déchiffrement de cette donnée sont relativement longues. De même, les opérations de chiffrement et de calcul d'un code d'authentification sont aussi relativement longues. Ainsi, pour accélérer les transferts de données entre la mémoire déchiffrée et la mémoire chiffrée, il a déjà été proposé de faire ces transferts par bloc de plusieurs données, plutôt qu'individuellement pour chaque donnée. Dans ce cas, le bloc de données est enregistré dans la mémoire chiffrée sous la forme d'un bloc de données chiffrées et authentifiées.

Un tel bloc de données chiffrées et authentifiées comprend notamment :
- un cryptogramme du bloc de données en clair, et
- un code d'authentification de ce cryptogramme.

Le cryptogramme du bloc de données en clair est obtenu en traitant le bloc de données comme un seul bloc de bits et sans distinguer les données les unes des autres. Ainsi, pour obtenir un cryptogramme, une seule opération de chiffrement est exécutée au lieu d'une opération de chiffrement pour chaque donnée de ce bloc de données. Ceci accélère l'opération de chiffrement des données. En contrepartie, le cryptogramme ne peut être déchiffré qu'en une seule opération de déchiffrement. En particulier, il n'est pas possible de déchiffrer qu'une partie seulement des données sans déchiffrer la totalité du cryptogramme.

De façon similaire, le code d'authentification est commun à l'ensemble des données du bloc de données. Il est donc calculé en une seule opération et en traitant le bloc de données comme un seul bloc. Ainsi, on évite de construire un code d'authentification pour chaque donnée de ce bloc de données. Cela accélère aussi la construction du code d'authentification.

Lors du transfert d'un bloc de données chiffrées et authentifiées de la mémoire chiffrée vers la mémoire déchiffrée, le microprocesseur vérifie d'abord l'intégrité du cryptogramme transféré à l'aide du code d'authentification contenu dans ce bloc de données chiffrées et authentifiées. Si la vérification échoue, le traitement des données contenues dans ce bloc de données chiffrées et authentifiées est interdit. A l'inverse, si la vérification réussit, le bloc de données chiffrées et authentifiées est alors déchiffré pour obtenir un bloc de données en clair. Puis le bloc de données en clair est enregistré dans la mémoire déchiffrée.

Lors du transfert d'un bloc de données de la mémoire déchiffrée vers la mémoire chiffrée, les opérations inverses sont réalisées. En particulier :
- le bloc de données en clair est chiffré pour obtenir son cryptogramme, puis
- le code d'authentification est calculé, puis
- le bloc de données chiffrées et authentifiées est obtenu en regroupant le cryptogramme et le code d'authentification calculé.

Le bloc de données chiffrées et authentifiées ainsi obtenu est ensuite enregistré dans la mémoire chiffrée.

Par ailleurs, il existe souvent dans les codes binaires des programmes d'ordinateur, des données qui n'ont pas explicitement été initialisée à une valeur prédéterminée lors de la compilation ayant conduit à la génération de ce code binaire. Les valeurs des données non-initialisées sont donc inconnues au moins au début de l'exécution de ce code binaire. Pour éviter leur usage avant qu'elles soient initialisées, lors de l'exécution du code binaire, elles sont souvent regroupées dans une partie de la mémoire principale découpée en blocs de données non-initialisées. Les blocs de données non-initialisées ont la même structure que les blocs de données chiffrées et authentifiées, sauf que le code d'authentification associé au bloc de données non-initialisées est incorrect. Ainsi, si un bloc de données non-initialisées est chargé de la mémoire chiffrée vers la mémoire déchiffrée avant son initialisation, la vérification du code d'authentification échoue et le traitement des données non-initialisées est empêché. Par contre, il est possible d'écrire des données dans le bloc de données non-initialisées pour, notamment, permettre leur initialisation à une valeur connue. Ainsi, si l'instruction exécutée par le microprocesseur est une instruction d'écriture d'une donnée, cette donnée est écrite dans le bloc de données non-initialisées, ce qui permet de l'initialiser à une valeur connue et de l'utiliser pour des traitements ultérieurs.

Le fait que le traitement des données non-initialisées soit interdit permet d'empêcher qu'un attaquant puisse provoquer un fonctionnement inattendu du code binaire. En effet, un tel fonctionnement inattendu pourrait, par exemple, laisser fuir des informations confidentielles.

Les inventeurs ont cependant découvert qu'il reste encore possible de provoquer un tel fonctionnement inattendu du code binaire. Par exemple, pour cela, un bloc de données non-initialisées est d'abord chargé de la mémoire chiffrée vers la mémoire déchiffrée. Ensuite un nombre limité d'octets de ce bloc de données est initialisé, par écriture, dans ce bloc de données non-initialisées. Ainsi, à ce stade, ce bloc de données contient à la fois des données initialisées et des données non-initialisées. Il est donc partiellement initialisé. Enfin, lorsque le bloc de données partiellement initialisé n'est plus utilisé, il est sauvegardé dans la mémoire chiffrée. Comme expliqué ci-dessus, lors du transfert de la mémoire déchiffrée vers la mémoire chiffrée, le code d'authentification est calculé à partir de l'ensemble des données du bloc de données partiellement initialisé. Par conséquent, le code d'authentification est calculé en prenant en compte aussi bien les données initialisées que les données non-initialisées.

Dès lors, suite à cela, on trouve dans la mémoire chiffrée, un bloc de données chiffrées et authentifiées qui contient à la fois des données initialisées et des données non-initialisées. Ultérieurement, lorsque ce bloc de données chiffrées et authentifiées est transféré, une nouvelle fois, de la mémoire chiffrée vers la mémoire déchiffrée, la vérification de l'intégrité de ce bloc de données réussit et les données non-initialisées sont chargées dans la mémoire déchiffrée. Dans ce cas, rien n'empêche le traitement de ces données non-initialisées par le microprocesseur.

Par ce biais-là, il est donc possible de provoquer un fonctionnement inattendu du code binaire lors de son exécution. En particulier, pour provoquer le traitement des données non-initialisées par le microprocesseur, un bloc de données chiffrées et authentifiées dont on sait qu'il contient uniquement des données qui seront toutes traitées par le microprocesseur à un moment ou à un autre est remplacé par le bloc de données chiffrées et authentifiées qui contient des données non-initialisées. Dans ce cas, il est certain qu'à un moment ou à un autre, le microprocesseur va charger la donnée non-initialisée puis la traiter, comme s'il s'agissait d'une donnée qui a été correctement initialisée alors que ce n'est pas le cas.

De l'état de la technique est aussi connu de FR3071082A1, US2016277373A1 et US2019362081A1.

L'invention vise donc à renforcer la sécurité d'un tel procédé d'exécution d'un programme d'ordinateur par un appareil électronique comportant un microprocesseur, une mémoire déchiffrée, une mémoire chiffrée et un module matériel de sécurisation.

L'invention a donc pour objet un tel procédé d'exécution d'un programme d'ordinateur conforme à la revendication 1.

L'invention a également pour objet un module matériel de sécurisation pour la mise en œuvre du procédé d'exécution ci-dessus.

L'invention a également pour objet un compilateur apte à transformer automatiquement un code source d'un programme d'ordinateur en un code binaire de ce programme d'ordinateur, dans lequel le compilateur est apte à transformer automatiquement le code source en un code binaire tel que décrit ci-dessus.

L'invention sera mieux comprise à la lecture de la description qui va suivre, donnée uniquement à titre d'exemple non limitatif et faite en se référant aux dessins sur lesquels :
- la figure 1 est une illustration schématique de l'architecture d'un appareil électronique apte à exécuter un code binaire d'un programme d'ordinateur,
- la figure 2 est une illustration schématique d'une partie d'une mémoire principale de l'appareil de la figure 1,
- la figure 3 est une illustration schématique de la structure d'un bloc de données chiffrées et authentifiées contenu dans la partie de la mémoire de la figure 2,
- la figure 4 est un organigramme d'un procédé d'exécution du code binaire par l'appareil de la figure 1, et
- la figure 5 est un organigramme d'un procédé détaillant les opérations réalisées lorsque l'instruction exécutée du code binaire est une instruction de chargement ou d'écriture d'une donnée,
- la figure 6 est une illustration schématique d'un compilateur apte à générer le code binaire exécuté par l'appareil de la figure 1.

Les conventions, notations et définitions utilisées dans cette descriptions sont données dans le chapitre I. Ensuite, un exemple détaillé de mode de réalisation est décrit dans le chapitre II à l'aide des figures. Dans un chapitre III suivant, des variantes de ce mode de réalisation détaillé sont présentées. Enfin, les avantages des différents modes de réalisation sont présentés dans un chapitre IV.

### Chapitre I : Conventions, notations et définitions :

Dans les figures, les mêmes références sont utilisées pour désigner les mêmes éléments. Dans la suite de cette description, les caractéristiques et fonctions bien connues de l'homme du métier ne sont pas décrites en détails.

Dans cette description, les définitions suivantes sont adoptées.

Un « programme » désigne un ensemble d'une ou de plusieurs fonctions prédéterminées que l'on souhaite faire exécuter par un microprocesseur.

Un « code source » est une représentation du programme dans un langage informatique. Le code source n'est pas directement exécutable par un microprocesseur. Le code source est destiné à être transformé par un compilateur en un code binaire directement exécutable par le microprocesseur.

Un programme ou un code est dit être « directement exécutable » lorsqu'il est apte à être exécuté par un microprocesseur sans que ce microprocesseur n'ait besoin au préalable de le compiler au moyen d'un compilateur ou de l'interpréter au moyen d'un interpréteur.

Une « instruction » désigne une instruction machine exécutable par un microprocesseur. Une telle instruction est constituée :
- d'un opcode, ou code d'opération, codant la nature de l'opération à exécuter, et
- d'un ou plusieurs opérandes définissant la ou les valeurs des paramètres de cette opération.

Le jeu d'instructions machines d'un microprocesseur est formé par l'ensemble des opcodes utilisables pour former des instructions exécutables par le microprocesseur. Le jeu d'instructions machines peut être différent d'un microprocesseur à un autre.

Un « code machine » est un ensemble d'instructions machines. Il s'agit typiquement d'un fichier contenant une succession de bits portant la valeur « 0 » ou « 1 », ces bits codant les instructions à exécuter par le microprocesseur. Le code machine est directement exécutable par le microprocesseur, c'est-à-dire sans nécessiter une compilation ou une interprétation préalable.

Un « code binaire » est un fichier contenant une succession de bits portant la valeur « 0 » ou « 1 ». Ces bits codent des données et des instructions à exécuter par le microprocesseur. Ainsi, le code binaire comprend au moins un code machine et en plus, généralement, des données numériques traitées par ce code machine.

Au niveau du code binaire, une instruction et une donnée correspondent tous les deux à des bits. Toutefois, les instructions et les données ne sont pas traitées de la même façon par un microprocesseur. Par exemple, une instruction est seulement chargée puis exécutée par le microprocesseur lorsque le compteur ordinal pointe sur cette instruction. Une donnée est chargée par le microprocesseur seulement en réponse à l'exécution par ce microprocesseur d'une instruction de chargement de cette donnée.

On parle d'exécution d'une fonction pour désigner l'exécution des instructions réalisant cette fonction.

### Chapitre II : Exemple de mode de réalisation détaillé :

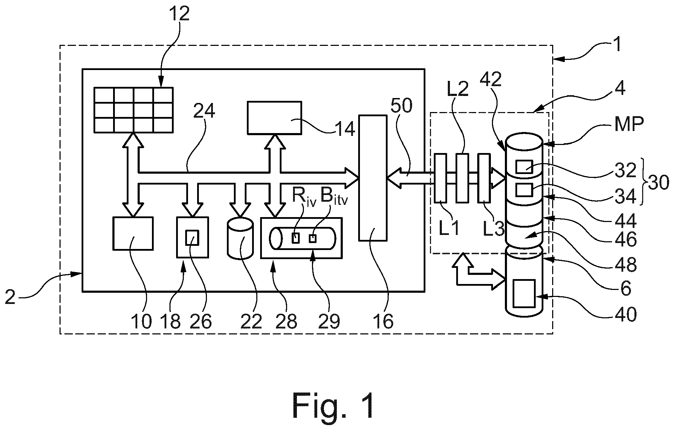

La figure 1 représente un appareil électronique 1 comportant un microprocesseur 2, un ensemble 4 de mémoires et un support 6 de stockage de masse. Par exemple, l'appareil 1 est un ordinateur, un smartphone, une tablette électronique ou similaire.

Le microprocesseur 2 comporte ici :
- une unité arithmétique et logique 10 ;
- un ensemble 12 de registres ;
- un tampon 14 de données ;
- une interface 16 d'entrée/sortie de données,
- un chargeur 18 d'instructions comportant un compteur ordinal 26,
- une file 22 d'instructions à exécuter, et
- un module matériel 28 de sécurisation comportant une mémoire non-volatile sécurisée 29.

L'ensemble 4 est configuré pour stocker les instructions et les données d'un code binaire 30 d'un programme devant être exécuté par le microprocesseur 2. L'ensemble 4 est une mémoire à accès aléatoire. Typiquement, l'ensemble 4 est une mémoire volatile. Chaque donnée et chaque instruction est associée à une adresse physique qui est utilisée pour la lire ou l'écrire sans modifier les autres données et instructions. Ainsi, par la suite, on dit que ces données et instructions sont adressables individuellement. A titre d'illustration, dans ce mode de réalisation, les données et les instructions sont chacune codées sur 32 bits et sont donc chacune formée par quatre octets. Par la suite, la taille d'une donnée, en nombre d'octets, est notée T_{d}.

Par exemple, l'ensemble 4 comporte :
- trois niveaux de mémoires caches, et
- une mémoire principale MP.

Les mémoires caches permettent d'accélérer le transfert de données entre la mémoire principale MP et le microprocesseur 2. Les trois niveaux de mémoire cache sont appelés habituellement L1, L2 et L3. Sur la figure 1, les symboles "L1", "L2" et "L3" sont utilisés pour désigner, respectivement, les trois mémoires caches L1, L2 et L3. Ici, pour simplifier la figure 1, la mémoire cache L1 est représentée à l'extérieur du microprocesseur 2 alors que, souvent, elle est intégrée à l'intérieur du microprocesseur 2. Ici, on considère qu'une mémoire est réalisée à l'extérieur du microprocesseur lorsqu'elle est réalisée sur un substrat différent de celui utilisé pour réaliser les différents composants du microprocesseur 2. Généralement, les autres mémoires caches sont à l'extérieur du microprocesseur 2. Les mémoires L1 à L3 sont classées par ordre de rapidité de lecture, la mémoire L1 étant la plus rapide. Généralement, la taille des mémoires cache est inversement proportionnelle à leur rapidité. Ainsi, ici, la taille de la mémoire L1 est inférieure à la taille de la mémoire L2 qui est elle-même inférieure à la taille de la mémoire L3.

Classiquement, après le chargement du code binaire 30 dans la mémoire MP, la mémoire MP comporte notamment les parties suivantes :
- une première partie 42 contenant les instructions à exécuter,
- une deuxième partie 44 contenant des données à traiter,
- une troisième partie 46 utilisée pour sauvegarder le contexte d'exécution d'une fonction lorsqu'elle appelle une autre fonction appelée "routine", et
- une quatrième partie 48 utilisée pour allouer dynamiquement de la mémoire au programme en cours d'exécution afin d'y enregistrer des données.

La partie 42 est connue sous le terme de "segment de code" ("code segment" ou "text segment" en anglais).

La partie 44 contient typiquement les variables statiques et globales du programme exécuté. La partie 44 est elle-même classiquement divisée en une première et une seconde sections. La première section contient les variables statiques est globales qui ont été initialisées lors de la compilation. Cette première section est connue sous le terme de segment de données et souvent notée ".data". La seconde section comporte les variables statiques et globales qui n'ont pas été initialisées lors de la compilation du code binaire 30. Cette seconde section est également connue sous le terme de "segment bss" et souvent notée ".bss". Généralement, ces deux sections sont contiguës.

La partie 46 est connue sous le terme de "pile d'exécution" ("call stack" en anglais). Par conséquent, par la suite, la partie 46 est également appelée "pile 46". Enfin la partie 48 est connue sous le terme de "tas" ("heap" en anglais). Ainsi, par la suite, la partie 48 est également appelée "tas 48".

Le code binaire 30 comporte notamment un code machine 32 et un bloc 34 de données nécessaires à l'exécution du code binaire 30. Le code machine 32 et le bloc 34 sont enregistrés dans, respectivement, les parties 42 et 44.

L'exécution du code binaire 30 débute par le chargement et le traitement de données du bloc 34. Ici, en particulier, le bloc 34 comporte un cryptogramme ka* obtenu en chiffrant une clé secrète ka à l'aide d'une clé publique pk_{CPU} du microprocesseur 2.

L'ensemble 4 de mémoire est raccordé au microprocesseur 2 par un bus de données et un bus d'adresses. Pour simplifier la figure 1, ces deux bus sont représentés par une double flèche 50 et désignés collectivement dans la suite de cette description par le terme "bus 50".

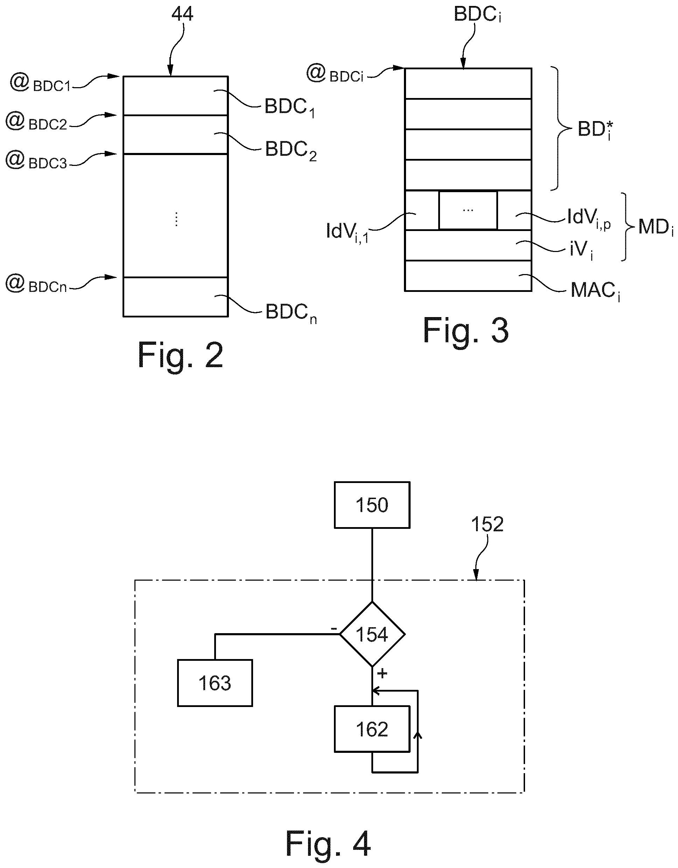

L'ensemble 4 est un ensemble de mémoires chiffrées, c'est-à-dire un ensemble dans lequel les données sont enregistrées sous forme chiffrée. Par la suite, la description est faite dans le cas particulier où les données chiffrées sont celles contenues dans la partie 44. Un découpage en blocs de données chiffrées et authentifiées de la partie 44 est représenté sur la figure 2. Dans cette figure et dans la suite de la description, on note "BDCᵢ" un bloc de données chiffrées et authentifiées, enregistré dans la mémoire MP à l'adresse @_{BDCi}, où l'indice i est un identifiant de ce bloc BDCᵢ. Ici, l'indice i est le numéro d'ordre du bloc de données compté à partir du premier bloc BDCᵢ, c'est-à-dire celui situé au début de la partie 44. L'adresse @_{BDCi} est ici égale à l'adresse à laquelle débute le bloc BDCᵢ. Dans cet exemple, l'indice i varie de 1 à n de sorte que la partie 44 est divisée en n blocs BDCᵢ distincts. Sur la figure 2 et les suivantes, le symbole "..." indique qu'une partie des éléments n'a pas été représentée.

Ici, tous les blocs BDCᵢ sont structurellement identiques. Ainsi, seul le bloc BDCᵢ représenté sur la figure 3 est décrit en détail. La taille du bloc BDCᵢ en nombre d'octets est noté T_{b} par la suite. La taille T_{b} est supérieure à huit ou seize et, généralement supérieur ou égale à 32 ou 64 octets. Généralement, la taille T_{b} est inférieure à 1 ko ou 1 Mo. Dans ce premier mode de réalisation, à titre d'illustration la taille T_{b} est égal à trente-deux octets.

Le bloc BDCᵢ comporte, dans l'ordre en partant de son adresse @_{BDCi} de début :
- un cryptogramme BDᵢ*,
- des métadonnées MDᵢ, et
- un code d'authentification MACᵢ,

Le cryptogramme BDᵢ* est obtenu en chiffrant un bloc BDᵢ de N_{d} données D_{i,j} en clair à l'aide de la clé cryptographique ka, où N_{d} est un nombre entier supérieur à un ou deux ou quatre. Ici, N_{d} est égale à quatre. L'indice j est un identifiant de la donnée D_{i,j} qui permet de la distinguer des autres données contenues dans le même bloc BDᵢ. Ici, l'indice j est le numéro d'ordre de la donnée D_{i,j} compté à partir de la première donnée D_{i,1} du bloc BDᵢ, c'est-à-dire à partir de la donnée D_{i,1} situé à l'adresse @_{BDi}.

Plus précisément, le cryptogramme BDᵢ* est obtenu à l'aide de la relation suivante : BDᵢ* = fₖₐ(BDᵢ ; ivᵢ), où :
- fₖₐ est une fonction de chiffrement, correspondant à une fonction de déchiffrement fₖₐ⁻¹, et
- ivᵢ est un vecteur d'initialisation également connu sous le nom de "nonce".

Les fonctions fₖₐ et fₖₐ⁻¹ sont préprogrammées dans le module 28. Typiquement, la fonction fₖₐ est une fonction de chiffrement symétrique.

Le vecteur ivᵢ est un vecteur d'initialisation dont la valeur est modifiée à chaque fois que la fonction fₖₐ est utilisée pour chiffrée un bloc BDᵢ de données en clair. A l'inverse, la clé ka est toujours la même. Dès lors, la clé ka permettant de déchiffrer le cryptogramme BDᵢ* est préenregistrée dans la mémoire 29 afin de permettre au module 28 de déchiffrer chaque cryptogramme BDᵢ*.

Dans ce mode de réalisation, chaque bloc BDᵢ contient N_{d} données associées à des adresses physiques respectives et consécutives. Ainsi, chaque bloc BDᵢ correspond donc à une plage continue de N_{d} adresses physiques consécutives. Ces plages d'adresses physiques sont distinctes les unes des autres. En particulier, elles ne se chevauchent pas de sorte qu'une même donnée D_{i,j} ne peut pas être contenue dans plusieurs blocs BDᵢ différents. De plus, ces plages d'adresses sont contiguës les unes aux autres de sorte qu'il n'existe pas, entre un premier bloc BDᵢ et un second bloc BDᵢ₊₁ contigus, des données qui n'appartiennent ni au bloc BDᵢ ni au bloc BDᵢ₊₁. Ainsi, les blocs BDᵢ divisent l'espace mémoire dans lequel sont enregistrées les données en une succession de blocs de données consécutifs. A l'intérieur d'un même bloc BDᵢ, les N_{d} données D_{i,j} sont, par exemple, classées par ordre d'adresses physiques croissantes de sorte que la donnée D_{i,1} est la première donnée du bloc BDᵢ. Dans ces conditions, l'adresse physique @_{BDi} de début du bloc BDᵢ est égale à l'adresse physique de la donnée D_{i,1}.

La taille T_{BD} du bloc BDᵢ est égale à N_{d}T_{d}, où T_{d} est la taille d'une donnée D_{i,j} en nombre d'octets. Ici, la taille du cryptogramme BDᵢ* est égale à la taille du bloc BDᵢ.

Les métadonnées MDᵢ contiennent ici:
- pour chaque donnée D_{i,j} et pour chaque bloc de Nₒ octets de cette donnée D_{i,j}, un indicateur de validité IdV_{i,p}, et
- le vecteur ivᵢ utilisé pour obtenir le cryptogramme BDᵢ*.

L'indice p est un identifiant de l'indicateur IdV_{i,p} qui permet de le distinguer de tous les autres indicateurs de validité contenus dans les métadonnées MDᵢ. Ici, l'indice p est le numéro d'ordre de l'indicateur IdV_{i,p} compté à partir du premier indicateur IdV_{i,1}, c'est-à-dire celui situé juste après le cryptogramme BDᵢ*. Ainsi, le nombre d'indicateurs IdV_{i,p} est égal à (T_{d}/Nₒ).N_{d}. Ici, T_{d} est égal à quatre. Dans cette description, le symbole "." désigne l'opération de multiplication scalaire.

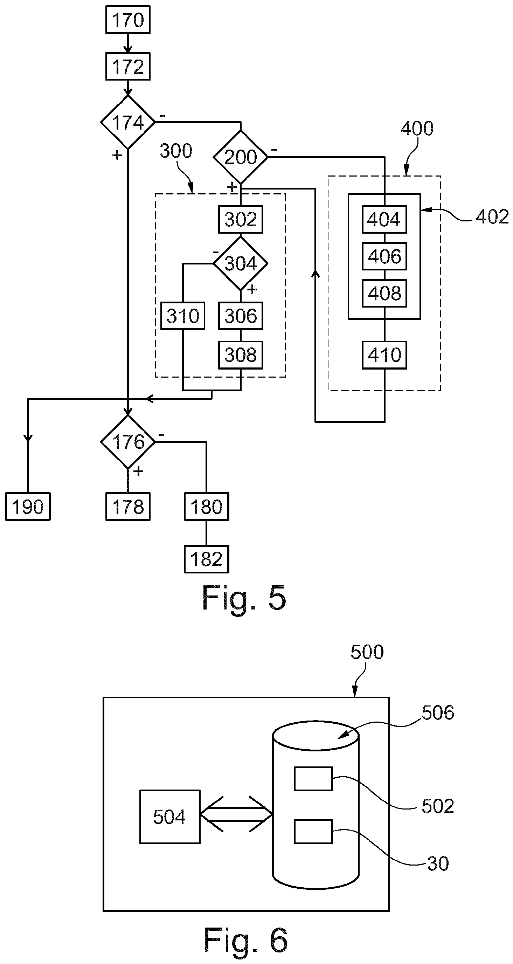

Chaque indicateur IdV_{i,p} est déplaçable entre un état actif et un état inactif. Dans l'état actif, l'indicateur IdV_{i,p} indique que le p-ième bloc de Nₒ octets du bloc BDᵢ de données en clair est valide. A l'inverse, dans l'état inactif, l'indicateur IdV_{i,p} indique que le p-ième bloc de Nₒ octets du bloc BDᵢ de données en clair est invalide. A cet effet, chaque indicateur IdV_{i,p} est codé sur un seul bit. Par exemple, les valeurs "0" et "1" de ce bit correspondent, respectivement, aux états inactif et actif. Le rôle de ces indicateurs IdV_{i,p} est détaillé plus loin en référence à la figure 5.

Le code MACᵢ est une étiquette d'intégrité qui permet de vérifier l'intégrité du bloc BDᵢ de données. A cet effet, ici, le code MACᵢ est un code permettant de vérifier l'intégrité et l'authenticité du cryptogramme BDᵢ*. De plus, dans ce mode de réalisation, le code MACᵢ permet aussi de vérifier l'intégrité et l'authenticité des indicateurs IdV_{i,p}. Ce code MACᵢ est communément appelé « code d'authentification de message » et connu sous l'acronyme MAC (« Message Authentification Code »). Un tel code MACᵢ est obtenu en construisant une empreinte numérique à partir du cryptogramme BDᵢ* et des indicateurs IdV_{i,p}. Cette empreinte numérique comporte normalement moins de bits que le cryptogramme BDᵢ*. Une telle empreinte numérique est plus connue sous le terme anglais de "digest" ou "hash". Cette empreinte numérique est construite à l'aide d'une fonction prédéterminée et d'une clé secrète k' connue seulement de l'auteur du code binaire 30 et du microprocesseur 2. Ici, la clé k' est préenregistrée dans la mémoire 29 du module 28 de sécurisation. Par exemple, la fonction prédéterminée est une fonction à sens unique telle qu'une fonction de hachage. Dans ce cas, généralement, l'empreinte numérique est le résultat de l'application de cette fonction de hachage à une combinaison, par exemple une concaténation, du cryptogramme BDᵢ*, des indicateurs IdV_{i,p} et de la clé k'. La taille du code MACᵢ est typiquement supérieure ou égale à 32 bits ou 64 bits. Ici, la taille du code MACᵢ est égale à huit octets (64 bits).

Dans ce mode de réalisation, pour accélérer les transferts de données entre le microprocesseur 2 et l'ensemble 4 de mémoires, les tailles T_{b} et T_{BD} sont toutes les deux des puissances de deux. Pour cela la taille T_{b} est égale à deux fois la taille T_{BD}. Ainsi, dans cet exemple, T_{b} est égale à trente-deux octets. Dans ces conditions, la taille des métadonnées MDᵢ est égale à huit octets. Sur ces huit octets, deux d'entre-eux sont utilisés pour stocker les indicateurs IdV_{i,p} et les deux octets restants sont utilisés pour stocker le vecteur ivᵢ.

Enfin, l'adresse physique @_{BDCi} à laquelle est enregistré le bloc BDCᵢ dans la mémoire MP est définie par la relation (1) suivante : @_{BDCi} = @_{BDi}.T_{b}/T_{BD}. Le ratio @BDᵢ/T_{BD} est ici nécessairement un nombre entier puisque l'adresse @_{BDi} est égale au cumul des tailles des blocs BD₁ à BDᵢ₋₁. Ainsi, les blocs BDCᵢ sont classées dans la mémoire MP dans le même ordre que les blocs BDᵢ, c'est-à-dire par ordre croissant des adresses physiques des données données D_{i,j} qui sont chiffrées dans ce bloc BDCᵢ. De plus, la relation (1) impose que les blocs BDCᵢ sont, dans la mémoire MP, immédiatement consécutifs les uns aux autres et ne se chevauchent pas.

Dans cet exemple, le jeu d'instructions machines du microprocesseur 2 comporte notamment une instruction d'écriture et une instruction de chargement.

Une instruction d'écriture est une instruction qui, lorsqu'elle est exécutée par l'unité 10, provoque l'écriture d'un ou plusieurs octets dans l'ensemble 4. Ici, le jeu d'instructions machines comporte notamment une instruction d'écriture qui permet d'écrire un bloc de Nₒ octets plus petit que la taille d'une donnée. Autrement dit Nₒ est plus petit que T_{d}. Ainsi, la plus petite granularité avec laquelle il est possible d'écrire dans l'ensemble 4 est inférieure à la taille T_{d} d'une donnée. En particulier, le microprocesseur 2 peut écrire seulement Nₒ octets d'une donnée sans écrire les autres octets de cette même donnée. Dans cet exemple, Nₒ est égal à un.

Une instruction de chargement est une instruction qui, lorsqu'elle est exécutée par l'unité 10, provoque le chargement d'un ou plusieurs octets dans le microprocesseur 2 à partir de l'ensemble 4. Généralement, le bloc d'octets chargé est enregistré dans un registre du microprocesseur comme, par exemple, un des registres de l'ensemble 12. Ici, le jeu d'instructions machines du microprocesseur 2 comporte une instruction de chargement qui permet de charger seulement un bloc de Nₒ octets et donc un bloc plus petit que la taille T_{d} d'une donnée.

A titre d'illustration, le microprocesseur 2 est conforme à l'architecture RISC (« Reduced Instructions Set Computer ») et il met en œuvre le jeu d'instructions "RISC-V".

Ici, l'unité 10 est une unité arithmétique et logique de Nᵢₙₛₜ bits. Typiquement, Nᵢₙₛₜ est un entier supérieure ou égale à 8, 16, 32 ou 64. Dans cet exemple, Nᵢₙₛₜ est égal à 32.

Le chargeur 18 charge dans la file 22 la prochaine instruction à exécuter par l'unité 10 à partir de l'ensemble 4 de mémoires. Plus précisément, le chargeur 18 charge l'instruction sur laquelle pointe le compteur ordinal 26.

L'unité 10 est notamment configurée pour exécuter les unes après les autres les instructions chargées dans la file 22. Les instructions chargées dans la file 22 sont généralement systématiquement exécutées dans l'ordre où ces instructions ont été enregistrées dans cette file 22. L'unité 10 est aussi capable d'enregistrer le résultat de ces instructions exécutées dans un ou plusieurs des registres de l'ensemble 12.

Dans cette description, on utilisera comme synonymes « exécution par le microprocesseur 2 » et « exécution par l'unité 10 ».

Le tampon 14 est utilisé pour accélérer encore plus les transferts de données entre le microprocesseur 2 et l'ensemble 4 de mémoire. Pour cela, les données transférées entre le microprocesseur 2 et l'ensemble 4 sont systématiquement transférées par bloc entier contenant exactement N_{d} données. Plus précisément, lors du chargement d'une donnée à partir de l'ensemble 4, c'est le bloc BDCᵢ qui contient cette donnée qui est transféré, dans sa totalité, au microprocesseur 2 par l'intermédiaire du bus 50. A l'inverse, lorsqu'une donnée doit être écrite dans l'ensemble 4 de mémoires, c'est un bloc BDCᵢ complet, qui contient cette donnée écrite, qui est transféré du microprocesseur 2 vers l'ensemble 4 par l'intermédiaire du bus 50.

Ici, le tampon 14 est une mémoire déchiffrée, c'est-à-dire une mémoire dans laquelle les données sont enregistrées en clair. Ce tampon 14 est apte à contenir au moins un bloc BDᵢ de données en clair. Dans ce mode de réalisation, à titre d'illustration, il est apte à contenir un seul bloc de données BDᵢ.

Le module 28 est capable d'exécuter automatiquement les différentes opérations décrites en détails en référence au procédé de la figure 5 pour sécuriser l'exécution du programme d'ordinateur. En particulier, il est apte à transformer un bloc BDCᵢ en un bloc BDᵢ de données en clair et vice versa. Le module 28 fonctionne indépendamment et sans utiliser l'unité 10. Ainsi, il est capable de traiter des blocs de données avant et/ou après que ceux-ci soient traités par l'unité 10. A cet effet, il comporte notamment la mémoire non-volatile sécurisée 29. Aucun accès à cette mémoire 29 sans passer par l'intermédiaire du module 28 n'est prévu. Dans ce mode de réalisation, le module 28 est pré-programmé, par exemple lors de sa conception, pour exécuter des opérations telles que les opérations suivantes :
- vérifier l'intégrité et l'authenticité d'un bloc BDCᵢ à partir du code MACᵢ qu'il contient,
- calculer un code MACᵢ,
- chiffrer le bloc BDᵢ pour obtenir le cryptogramme BDᵢ*,
- déchiffrer le cryptogramme BDᵢ* pour obtenir le bloc BDᵢ de données en clair.

La mémoire 29 est utilisée pour stocker les informations secrètes nécessaires à la mise en œuvre du procédé de la figure 5. Ici, elle comporte donc notamment des informations secrètes pré-enregistrées avant le début de l'exécution du code binaire 30. En particulier, elle comporte les informations pré-enregistrées suivantes :
- une clé secrète k' utilisée pour le calcul et la vérification des codes MACᵢ,
- un clé privée secrète sk_{CPU} qui permet de déchiffrer les données qui ont été chiffrées à l'aide de la clé publique pk_{CPU}.

Dans ce mode de réalisation, la mémoire 29 comporte aussi :
- un registre Rᵢᵥ de vecteurs d'initialisation, et
- un registre B_{itV} d'indicateurs de validité.

Dans cet exemple de réalisation, l'ensemble 12 comporte des registres généraux utilisables pour stocker tout type de données.

Un bus d'échange de données 24 relie les différents composants du microprocesseur 2 entre eux. Il est représenté sur la figure 1 pour indiquer que les différents composants du microprocesseur 2 peuvent échanger des données entre eux.

Le support 6 est typiquement une mémoire non volatile. Par exemple, il s'agit d'une mémoire du type EEPROM ou Flash. Il contient ici une copie 40 de sauvegarde du code binaire 30. Typiquement, c'est cette copie 40 qui est automatiquement recopiée dans la mémoire 4 pour restaurer le code 30, par exemple, après une coupure de courant ou similaire ou juste avant que débute l'exécution du code 30.

La figure 4 représente un procédé d'exécution du code binaire 30 par le microprocesseur 2.

Le procédé débute par une étape 150 de génération puis de fourniture du code binaire 30 dans la mémoire MP. La génération du code binaire 30 est typiquement réalisée par un compilateur tel que celui décrit, plus loin, en référence à la figure 6. La fourniture du code binaire 30 consiste ensuite à enregistrer la copie 40 dans le support 6. Puis, par exemple, le microprocesseur 2 recopie la copie 40 à l'intérieur de la mémoire MP pour obtenir le code binaire 30 enregistré dans la mémoire MP. Ainsi, lors de l'étape 150, les bloc BDCᵢ construits lors de la compilation du code source et contenus dans le code binaire 30, sont enregistrés dans la mémoire MP et, généralement, dans la partie 44. Plus précisément, les blocs BDCᵢ qui contiennent les données initialisées par le compilateur sont enregistrés dans le segment de données. Les blocs BDCᵢ qui contiennent les données qui n'ont pas été explicitement initialisées par le compilateur sont enregistrés dans le segment bss. Une donnée est considérée comme initialisée, si le compilateur lui a explicitement affectée une valeur. De plus, à chaque fois que le compilateur construit un bloc BDCᵢ, il bascule dans l'état actif les indicateurs IdV_{i,p} qui sont associés aux blocs de Nₒ octets initialisés. A l'inverse, les indicateurs IdV_{i,p} qui sont associés aux blocs de Nₒ octets qui n'ont pas été explicitement initialisés sont basculés dans leur état inactif. Ainsi, en général, les indicateurs IdV_{i,p} de tous les blocs BDCᵢ enregistrés dans le segment de données sont dans leur état actif. A l'inverse, les indicateurs IdV_{i,p} de tous les blocs BDCᵢ enregistrés dans le segment bss sont dans leur état inactif.

Ensuite, lors d'une phase 152, le microprocesseur 2 exécute le code binaire 30 et, en particulier, le code machine 32.

Éventuellement, l'exécution du code binaire 30 commence par une étape 154 d'authentification de l'auteur de ce code binaire. Si l'authentification est réussie avec succès, alors le procédé se poursuit par une étape 162. À l'inverse, si l'authentification n'a pas été réussie avec succès, le module 28 considère alors que l'authentification de l'auteur du code binaire 30 a échoué et le procédé se poursuit par une étape 163. Lors de l'étape 163, l'exécution du code binaire 30 est arrêtée.

Lors de l'étape 162, le module 28 charge notamment le cryptogramme ka* contenu dans le bloc 34 et le déchiffre à l'aide de la clé sk_{CPU} contenue dans la mémoire 29. À l'issue de l'étape 162, la clé ka est contenue dans la mémoire 29.

Ensuite, lors de l'étape 162, le microprocesseur 2 exécute, les unes après les autres, les instructions du code machine 32. Lors ce de cette étape 162, des instructions de chargement et des instructions d'écriture sont exécutées. Par la suite, ces deux types d'instructions sont collectivement désignées par l'expression "instruction d'accès" ou "instruction d'accès à la mémoire". A chaque fois qu'une instruction d'accès à la mémoire est exécutée par le microprocesseur 2, le procédé de la figure 5 est exécuté.

Le procédé de sécurisation des données enregistrées dans l'ensemble 4 va maintenant être décrit à l'aide de la figure 5 et dans le cas où la donnée accédée est la donnée D_{i,j} . L'adresse physique associée à la donnée D_{i,j} est notée par la suite @_{Di,j}.

En réponse à l'exécution d'une instruction d'accès à la donnée D_{i,j}, lors d'une étape 170, l'adresse @_{Di,j} est transmise au module 28.

Lors d'une étape 172, le module 28 détermine l'adresse @_{BDCi} du bloc BDCᵢ qui contient cette donnée D_{i,j}. Pour cela, le module 28 calcule ici l'adresse @_{BDCi} selon la relation (2) suivante : @_{BDCi} = E(@_{Di,j}/T_{BD}).T_{b}, où :
- E(...) est la fonction qui retourne la partie entière du nombre entre parenthèses, et
- T_{BD} et T_{b} sont les tailles, en nombre d'octets, respectivement du bloc BDᵢ et du bloc BDCᵢ.

La fonction E(...) est connue sous le terme anglais de "floor".

Dans la mémoire MP, les blocs BDCᵢ sont immédiatement consécutifs les uns aux autres. De plus, ils sont classés par ordre croissant des adresses physiques des données D_{i,j} qui sont chiffrées dans chacun de ces blocs BDCᵢ. Dès lors, le terme E(@_{Di,j}/T_{BD}) donne le numéro d'ordre du bloc BDCᵢ à partir duquel la donnée D_{i,j} peut être chargée. Étant donné que dans ce mode de réalisation, les tailles T_{BD} et T_{b} sont toutes les deux des puissances de deux, la division par la taille T_{BD} et la multiplication par la taille T_{b} peuvent toutes les deux être réalisées par un registre à décalage. Un registre à décalage décale les bits du nombre qu'il contient vers la droite pour réaliser une division et vers la gauche pour réaliser une multiplication. Plus précisément, dans ce mode de réalisation, la taille T_{BD} est égale à 2⁴ octets et la taille T_{b} est égale à 2⁵ octets. Ici, le module 28 comporte donc un registre matériel à décalage. Dans ces conditions, le module 28 est capable de calculer très rapidement, et typiquement en un cycle d'horloge, l'adresse @_{BDCi}.

Ainsi, ici, pour calculer l'adresse @_{BDCi}, le module 28 enregistre l'adresse @_{Di,j} dans son registre à décalage puis décale de quatre bits vers la droite les bits de l'adresse enregistrée dans ce registre pour obtenir le résultat du ratio @_{Di,j}/T_{BD}. Ensuite le module 28 calcule la partie entière du ratio obtenu puis enregistre cette partie entière dans le registre à décalage. Enfin, le registre à décalage décale de cinq bits vers la gauche les bits de cette partie entière pour obtenir l'adresse @_{BDCi}.

Il est préférable que le calcul de l'adresse @_{BDCi} soit très rapide, car ce calcul est réalisé à chaque fois qu'une donnée est accédée. Une fois l'adresse @_{BDCi} déterminée, le module 28 vérifie si l'adresse @_{BDCi} est égale à une adresse @_{BDCc}. L'adresse @_{BDCc} est l'adresse du bloc BDC_{c} à partir duquel le bloc BD_{c} actuellement contenu dans le tampon 14 a été chargé. L'adresse @_{BDCc} est, par exemple, enregistrée dans la mémoire 29.

Dans l'affirmative, cela signifie que le bloc BDᵢ qui contient la donnée D_{i,j} à accéder est déjà enregistré dans le tampon 14. Autrement dit, les blocs BDᵢ et BD_{c} sont les mêmes. Dans ce cas, le procédé se poursuit :
- directement par une étape 176 si l'instruction d'accès exécutée est une instruction de chargement, ou
- directement par une étape 190 si l'instruction d'accès exécutée est une instruction d'écriture.

Lors de l'étape 176, pour chaque octet à charger, le module 28 vérifie si l'indicateur IdV_{i,p} associé à cet octet est dans l'état actif. Pour cela, le module 28 utilise les indicateurs IdV_{i,p} associés à chacun des octets du bloc BDᵢ qui sont enregistrés dans le registre B_{itV} de la mémoire 29.

Si l'indicateur IdV_{i,p} associé à cet octet est dans l'état actif, lors d'une étape 178, le traitement de cet octet par le microprocesseur 2 est autorisé. Dans ce cas, il est alors directement chargé à partir du tampon 14 puis, par exemple, transféré dans l'un des registres de l'ensemble 12. Ensuite, l'unité 10 exécute des instructions de traitement des données enregistrées dans les registres de l'ensemble 12.

Si l'indicateur IdV_{i,p} associé à cet octet est dans l'état inactif, le traitement, par le microprocesseur 2, de cet octet est interdit. Dans ce cas, le procédé se poursuit par une étape 180 d'inhibition du chargement des octets associés à ces indicateurs IdV_{i,p} dans l'état inactif. Par exemple, lors de l'étape 180, aucun des octets qui auraient dû être chargés par le microprocesseur 2 en réponse à l'exécution de l'instruction de chargement n'est chargé dans un registre de l'ensemble 12. De plus, ici, lors de l'étape 180, le module 28 déclenche le signalement d'une faute d'exécution du code binaire 30.

En réponse à un tel signalement, lors d'une étape 182, le microprocesseur 2 met en œuvre une ou plusieurs mesures correctives et/ou une ou plusieurs contre-mesures. A titre d'exemple d'une mesure corrective, lors de l'étape 182, le module 28 initialise à une valeur prédéterminée, par exemple zéro, les octets du bloc BDᵢ qui devaient être chargés alors qu'ils n'avaient pas encore été initialisés. Après cela, le module 28 bascule les indicateurs IdV_{i,p} associés à ces octets initialisés dans leur état actif.

De très nombreuses contre-mesures sont possibles. Les contre-mesures mises en œuvre peuvent avoir des degrés de sévérité très différents. Par exemple, les contre-mesures mises en œuvre peuvent aller d'un simple affichage ou une simple mémorisation d'un message d'erreur sans interrompre l'exécution normale du code binaire, jusqu'à une mise hors service définitive du microprocesseur 2. Le microprocesseur 2 est considéré comme étant hors service lorsqu'il est définitivement placé dans un état où il est incapable d'exécuter un quelconque code binaire. Entre ces degrés de sévérité extrêmes, il existe de nombreuses autres contre-mesures possibles telles que :
- l'indication par l'intermédiaire d'une interface homme-machine de la détection des fautes,
- l'interruption immédiate de l'exécution du code binaire et/ou sa réinitialisation, et
- la suppression du code binaire de la mémoire MP et/ou la suppression de la copie 40 de sauvegarde et/ou la suppression des données secrètes.

Lors de l'étape 190, le ou les octets à écrire sont directement écrits dans le bloc de données BDᵢ actuellement enregistré dans le tampon 14.

Avant d'écrire un octet dans le tampon 14, le module 28 ne procède pas à la vérification de l'état de l'indicateur IdV_{i,p} associé à cet octet. Au contraire, à chaque fois qu'un octet est écrit dans le tampon 14, le module 28 fait basculer systématiquement l'indicateur IdV_{i,p} associé à cet octet dans son état actif. En effet, à partir du moment où le microprocesseur 2 a écrit un octet, la valeur de cet octet est initialisée et sa valeur n'est plus inconnue.

Si lors de l'étape 174, l'adresse @_{BDCi} est différente de l'adresse contenue dans la mémoire 29, cela signifie que le bloc BD_{c} actuellement contenu dans le tampon 14 ne contient pas la donnée D_{i,j} à accéder. Dans ce cas, le procédé se poursuit par une étape 200.

Lors de l'étape 200, le module 28 vérifie si le bloc BD_{c} actuellement contenu dans le tampon 14 a été écrit. Typiquement, pour faire cela, le module 28 vérifie l'état d'un indicateur d'écriture. Un tel indicateur d'écriture est connu sous le terme anglais de « bit dirty». L'indicateur d'écriture est basculé vers son état actif à chaque fois qu'un octet est écrit dans une donnée D_{c,j} du tampon 14. L'état actif de cet indicateur d'écriture indique donc que le bloc BD_{c} a été écrit.

A chaque fois qu'un nouveau bloc de données en clair est enregistré dans le tampon 14, l'indicateur d'écriture est basculé dans son état inactif. Ainsi, l'état inactif de l'indicateur d'écriture indique que le bloc BD_{c} enregistré dans le tampon 14 n'a pas été écrit.

Si l'indicateur d'écriture est dans son état inactif, il n'est pas nécessaire d'enregistrer le bloc de données BD_{c} dans l'ensemble 4. Dans ce cas, le procédé se poursuit directement par une étape 300 de transfert du bloc BDCᵢ qui contient la donnée D_{i,j} chiffrée depuis l'ensemble 4 vers le tampon 14.

Dans le cas contraire, le bloc BD_{c} actuellement enregistré dans le tampon 14 doit être sauvegardé dans l'ensemble 4. Dans ce cas, le procédé se poursuit par une étape 400 de transfert du bloc BD_{c} actuellement contenu dans le tampon 14 vers l'ensemble 4.

L'étape 300 débute par une opération 302 de chargement du bloc BDCᵢ situé à l'adresse @_{BDCi} déterminée lors de l'étape 172. De préférence, le bloc BDCᵢ est chargé depuis l'ensemble 4 vers le microprocesseur en utilisant un mode de transfert accéléré de bloc de données sur le bus 50. Un tel mode est par exemple connu sous le terme anglais de « burst mode ».

Le bloc BDCᵢ chargé est alors temporairement stocké dans le microprocesseur 2. Par exemple, il est enregistré dans l'ensemble 12 ou dans la mémoire 29 ou dans le tampon 14.

Lors de l'opération 304, le module 28 vérifie l'intégrité du bloc BDCᵢ. Ici, il vérifie l'intégrité et l'authenticité du cryptogramme BDᵢ* et des indicateurs IdV_{i,p} à l'aide du code MACᵢ. Pour cela, le module 28 calcule un code MACᵢ' en utilisant le même algorithme que celui mis en œuvre pour construire le code MACᵢ sauf qu'il utilise le cryptogramme BDᵢ* et les indicateurs IdV_{i,p} chargés lors de l'opération 302. Si le code MACᵢ' ainsi construit est identique au code MACᵢ chargé, alors l'intégrité et l'authenticité du cryptogramme BDᵢ* et des indicateurs IdV_{i,p} est confirmée. Dans ce cas, le module 28 procède, lors d'une opération 306, au déchiffrement du cryptogramme BDᵢ* en utilisant pour cela la clé ka enregistrée dans sa mémoire 29 et le vecteur ivᵢ extrait à partir des métadonnées MDᵢ du bloc BDCᵢ chargé.

Après l'opération 306, lors d'une opération 308, le bloc BDᵢ en clair obtenu est enregistré dans le tampon 14 à la place du précédent bloc de données. Les indicateurs IdV_{i,p} contenus dans le bloc BDCᵢ chargé sont enregistrés dans le registre B_{itV} de la mémoire 29. Le vecteur ivᵢ est quant à lui enregistré dans le registre Rᵢᵥ de la mémoire 29. Enfin, l'adresse @_{BDCi} du bloc BDCᵢ chargé est aussi enregistrée dans la mémoire 29.

Dans le cas où la vérification de l'intégrité du bloc BDCᵢ échoue, le module 28 procède à une opération 310 de préparation d'un bloc BDᵢ vierge. Lors de cette opération 310, le module 28 initialise toutes les données du bloc BDᵢ vierge à une valeur prédéterminée. Typiquement, cette valeur prédéterminée est la valeur zéro. Ensuite, ce bloc BDᵢ vierge est enregistré dans le tampon 14. Toujours lors de cette opération 310, le module 28 bascule aussi chacun des indicateurs IdV_{i,p}, contenus dans le registre B_{itV} de la mémoire 29, dans leur état inactif. Il ré-initialise aussi la valeur du vecteur ivᵢ contenue dans le registre Rᵢᵥ. Par exemple, la nouvelle valeur du vecteur ivᵢ contenu dans le registre Rᵢᵥ est générée par tirage aléatoire ou pseudo-aléatoire. Enfin, l'adresse @_{BDCi} du bloc BDCᵢ chargé est aussi enregistrée dans la mémoire 29. Ainsi, dans le cas où la vérification de l'intégrité du bloc BDCᵢ échoue, c'est un bloc BDᵢ vierge qui est enregistré dans le tampon 14.

Après l'opération 308 ou 310, le procédé se poursuit par l'étape 176 ou l'étape 190 selon que l'instruction à exécuter est une instruction de chargement ou une instruction d'écriture.

L'étape 400 débute par une opération 402 de transformation du bloc BD_{c} en un bloc BDC_{c}.

Pour cela, lors d'une sous-opération 404, le module 28 commence par générer un nouveau vecteur ivᵢ. Le nouveau vecteur ivᵢ est par exemple généré à partir de l'ancienne valeur de ce vecteur ivᵢ enregistrée dans le registre Rᵢᵥ. Par exemple, le nouveau vecteur ivᵢ est obtenu en incrémentant cette ancienne valeur d'un pas prédéterminé.

Ensuite, lors d'une sous opération 406, le module 28 chiffre le bloc BD_{c} actuellement contenu dans le tampon 14 en utilisant pour cela la clé ka et le nouveau vecteur ivᵢ généré lors de la sous-opération 404. A l'issue de cette opération, le cryptogramme BD_{c}* est obtenu.

Lors d'une sous-opération 408, le module 28 calcule le nouveau code MAC_{c} à partir du cryptogramme BD_{c}* obtenu à l'issue de la sous-opération 406 et à partir des indicateurs IdV_{c,p} actuellement contenus dans le registre B_{itV} de la mémoire 29.

Enfin, une fois le nouveau code MAC_{c} calculé, à la fin de la sous-opération 408, le module 28 regroupe dans un même bloc de données, le cryptogramme BD_{c}*, les indicateurs IdV_{c,p} du registre B_{itV}, le nouveau vecteur iv_{c} et le nouveau code MAC_{c} afin d'obtenir un nouveau bloc BDC_{c}.

Après, lors d'une opération 410, le nouveau bloc BDC_{c} est enregistré dans l'ensemble 4 à l'adresse @_{BDCc} actuellement contenue dans la mémoire 29.

L'étape 400 s'achève alors et le procédé se poursuit par l'étape 300.

La figure 6 représente un compilateur 500 apte à générer automatiquement le code binaire 30 à partir d'un code source 502. À cet effet, le compilateur 500 comporte typiquement un microprocesseur 504 programmable et une mémoire 506. La mémoire 506 contient les instructions et les données nécessaires pour, lorsqu'elles sont exécutées par le microprocesseur 504, générer automatiquement le code binaire 30 à partir du code source 502. En particulier, lors de la compilation du code source 502, le microprocesseur 504 génère automatiquement les bloc BDCᵢ qui seront ensuite enregistrés dans la partie 44 de la mémoire MP après chargement de ce code binaire 30 dans cette mémoire MP. Plus précisément, lors de la compilation, le compilateur 500 transforme chaque bloc BDᵢ en clair destiné à être enregistré dans la partie 44 de la mémoire MP en un bloc BDCᵢ de la façon similaire à ce qui a été décrit en référence de l'étape 400. La conception et la réalisation d'un tel compilateur sont à la portée de l'homme du métier à partir des explications données dans cette description.

### CHAPITRE III : VARIANTES

### Variantes de l'appareil 1 :

D'autres modes de réalisation de l'ensemble 4 sont possibles. Par exemple, l'ensemble 4 peut comporter un plus grand nombre ou un plus petit nombre de mémoire cache. Dans un cas très simplifié, l'ensemble 4 ne comporte pas de mémoire cache et comporte, par exemple, seulement la mémoire principale MP.

La mémoire MP peut être une mémoire non volatile. Dans ce cas, il n'est pas nécessaire de copier le code binaire 30 à l'intérieur de cette mémoire avant le lancement de son exécution puisqu'il s'y trouve déjà.

Le fait qu'une mémoire de l'ensemble 4 soit intégrée ou non à l'intérieur du microprocesseur 2 peut être librement modifié. Ainsi, en variante, la mémoire cache L1 est située à l'extérieur du microprocesseur 2 et non pas à l'intérieur. De même, dans une autre variante, les mémoires caches L1 et L2 voire L3 sont intégrées à l'intérieur du microprocesseur 2, c'est-à-dire réalisées sur la même puce semi-conductrice que l'unité 10 du microprocesseur 2. En variante, la mémoire MP peut aussi être une mémoire interne intégrée à l'intérieur du microprocesseur 2. Dans ce dernier cas, elle est réalisée sur le même substrat que les autres éléments du microprocesseur 2. Enfin, dans d'autres configurations, la mémoire MP se compose de plusieurs mémoires dont certaines sont des mémoires internes et d'autres des mémoires externes.

Il existe des microprocesseurs dont le jeu d'instructions machines permet seulement, au minimum, d'écrire plusieurs octets et non pas un seul octet à la fois. Dans ce cas, Nₒ est supérieur à un. Par exemple, Nₒ est égal à deux. Dans ce cas, l'indicateur IdV_{i,p} n'est pas associé à chaque octet, mais à chaque bloc de deux octets. Dans d'autres modes de réalisation, le nombre Nₒ peut être supérieur à deux et, par exemple, égal à quatre. En variante, les nombres Nₒ et T_{d} sont égaux. Dans ce cas, la plus petite granularité avec laquelle le microprocesseur 2 peut écrire dans la mémoire MP est la donnée D_{i,j} entière. Dans ce cas, chaque donnée D_{i,j} est associée à un seul indicateur IdV_{i,p}.

De nombreuses architectures matérielles différentes sont possibles pour réaliser le module 28. En particulier, le module 28 peut être composé par la combinaison de plusieurs blocs matériels du microprocesseur 2 remplissant des fonctions respectives et situés chacun dans une aire différente de la puce du microprocesseur 2.

En variante, le tampon 14 est apte à contenir simultanément plusieurs blocs de données en clair.

### Variantes du code d'authentification :

D'autres méthodes de calcul du code d'authentification sont possibles. Par exemple, en variante, le module 28 calcule un premier code d'authentification uniquement à partir du cryptogramme BDᵢ* et un second code d'authentification uniquement à partir des indicateurs IdV_{i,p}. Dans ce cas, le code d'authentification contenu dans le bloc BDCᵢ est le résultat, par exemple, de la concaténation de ce premier et de ce second codes d'authentification. Ensuite, les premier et second codes d'authentification sont utilisés par le module 28 pour vérifier l'intégrité, respectivement, du cryptogramme BDᵢ* et des indicateurs IdV_{i,p} lors de l'opération 304.

Dans un autre mode de réalisation, le code MACᵢ est calculé à partir du cryptogramme BDᵢ* et sans prendre en compte les indicateurs IdV_{i,p}. Dans ce cas, de préférence, les indicateurs IdV_{i,p} sont alors chiffrés de sorte qu'ils n'apparaissent pas en clair dans le bloc BDCᵢ. Par exemple, ils sont chiffrés à l'aide de la fonction fₖₐ.

Dans une autre variante, le code MACᵢ est calculé à partir des données D_{i,j} en clair et non pas à partir du cryptogramme BDᵢ*. Dans ce cas, il faut inverser l'ordre des opérations de vérification de l'intégrité du code d'authentification et de déchiffrement du cryptogramme BDᵢ*. En effet, dans ce cas, les données doivent d'abord être déchiffrées et seulement ensuite, le module 28 est en mesure d'en vérifier l'intégrité.

### Variantes des métadonnées :

En variante les métadonnées MDᵢ comportent d'autres données que les indicateurs IdV_{i,p} et que le vecteur ivᵢ. A l'inverse, dans un mode de réalisation simplifié, les métadonnées MDᵢ ne comporte pas le vecteur ivᵢ. Dans ce dernier cas, le vecteur ivᵢ à utiliser pour déchiffrer le cryptogramme BDᵢ* est alors stocké différemment. Par exemple, un registre associant, à chaque bloc BDCᵢ, le vecteur ivᵢ nécessaire pour déchiffrer le cryptogramme BDᵢ* est enregistré dans la mémoire MP.

Les métadonnées peuvent être enregistrées dans le tampon 14 ou dans un registre indépendant du tampon 14 et de la mémoire 29. Dans le cas où les métadonnées MDᵢ sont enregistrées dans le tampon 14, celles-ci sont, de préférence, enregistrées dans une plage d'adresses distincte de la plage d'adresses où sont enregistrées les données D_{i,j}. Typiquement, cette plage d'adresses distincte n'est pas adressable par le microprocesseur de sorte que la présence des métadonnées MDᵢ dans le tampon 14 ne modifie en rien l'adressage des données D_{i,j}. Par contre, les métadonnées MDᵢ sont accessibles par le module 28 pour qu'il puisse mettre en œuvre les différentes étapes décrites dans le chapitre II.

En variante, lorsque le nouveau vecteur ivᵢ d'un bloc BDCᵢ est généré sans prendre en compte sa précédente valeur, il n'est pas nécessaire de sauvegarder sa précédente valeur dans le registre Rᵢᵥ après le chargement du bloc BDCᵢ dans le tampon 14. C'est par exemple le cas lorsque, à chaque transfert d'un bloc de données du tampon 14 vers l'ensemble 4, le nouveau vecteur ivᵢ est généré par tirage aléatoire ou pseudo aléatoire.

D'autres méthodes de génération d'un nouveau vecteur ivᵢ sont possibles. Par exemple, le nouveau vecteur ivᵢ est pris égal à la précédente valeur du code MACᵢ. Dans ce cas, à chaque fois qu'un bloc BDCᵢ est transféré de l'ensemble 4 vers le tampon 14, le code MACᵢ contenu dans ce bloc BDCᵢ est enregistré dans le microprocesseur, par exemple, dans la mémoire 29.

Le nouveau vecteur ivᵢ peut aussi être complété par d'autres informations pour obtenir un vecteur d'initialisation complet ivcᵢ puis, lors de l'opération 406 de chiffrement, c'est ce vecteur ivcᵢ qui est utilisé à la place du vecteur ivᵢ. Dans ce cas, le cryptogramme BDᵢ* est le résultat de la fonction fₖₐ(BDᵢ ; ivcᵢ). L'opération 306 de déchiffrement doit alors être adaptée en conséquence. Autrement dit, le bloc BDᵢ en clair est le résultat de la fonction fₖₐ⁻¹(BDᵢ* ; ivcᵢ). Par exemple, le vecteur ivcᵢ est obtenu en combinant le vecteur ivᵢ et l'adresse @_{BDCi} contenue dans la mémoire 29. Par exemple, le vecteur ivᵢ et l'adresse @_{BDCi} sont concaténés. Le vecteur ivcᵢ peut aussi être obtenu en combinant le vecteur ivᵢ avec un identifiant du code binaire 30. Dans ce cas, le cryptogramme BDᵢ* obtenu est fonction du code binaire 30 à exécuter. Le vecteur ivcᵢ peut aussi être obtenu en combinant le vecteur ivᵢ, l'adresse @_{BDCi} et l'identifiant du code binaire 30.

Chaque indicateur IdV_{i,p} peut être composé de plusieurs bits et non pas d'un seul bit comme précédemment décrit.

### Variantes du procédé :

En cas de tentative de chargement d'un octet associé à un indicateur IdV_{i,p} dans l'état inactif, de nombreuses autres actions sont possibles que le signalement d'une faute d'exécution. Par exemple, une ou plusieurs des actions appartenant au groupe constitué des actions suivantes sont déclenchées et exécutées :
- le signalement d'une faute d'exécution,
- l'initialisation de cet octet à une valeur prédéterminée comme, par exemple, à zéro, et
- l'exécution d'une contre-mesure.

De même, lorsque la vérification de l'intégrité du code MACᵢ échoue, une ou plusieurs des actions du groupe ci-dessus peuvent être déclenchées et exécutées.

En variante, une autre relation que la relation (1) est utilisée pour déterminer l'adresse @_{BDCi} où est enregistré le bloc BDCᵢ. Dans ce cas, la relation (2) doit être adaptée en conséquence. Par exemple, dans un mode de réalisation particulièrement souple, le module 28 comporte une table de correspondance qui, à chaque adresse @_{BDi} d'un bloc BDᵢ en clair associe l'adresse @_{BDCi} du bloc BDCᵢ contenant les données D_{i,j} sous forme chiffrée. Dans un tel cas, le module 28 peut déterminer l'adresse @_{BDCi} du bloc contenant la donnée D_{i,j} située à l'adresse @_{Di,j} en mettant en œuvre les étapes suivantes :
- Étape 1 : le module 28 calcule l'adresse @_{BDi} du bloc BDᵢ qui contient la donnée D_{i,j} à l'aide de la relation suivante : @_{BDi}= E(@_{Di,j}/T_{BD}).T_{BD}, puis
- Etape 2 : le module 28 recherche dans la table de correspondance l'adresse @_{BDCi} associée à l'adresse @_{BDi} calculée.

Le fait que les tailles T_{b} et T_{BD} soient toutes les deux des puissances de deux impose que la taille T_{b} est deux fois plus grande que la taille T_{BD}. Ainsi à chaque fois que la taille T_{BD} est augmentée, la taille T_{b} doit aussi être augmentée de façon proportionnelle. Cela revient donc à augmenter l'espace disponible pour stocker les métadonnées MDᵢ et le code MACᵢ. Or, il n'est pas toujours souhaitable d'augmenter l'espace disponible pour stocker les métadonnées MDᵢ et le code MACᵢ car cela revient à occuper plus de place en mémoire, sans que cela se traduise nécessairement par une amélioration des performances de l'appareil 1. Ainsi, en variante, la taille T_{b} n'est pas égale à deux fois la taille T_{BD}. Par exemple, la taille T_{b} est plus petite que 2T_{BD}. Dans ce dernier cas, de préférence, les tailles T_{b} et T_{BD} sont alors choisies de manière à ce que le nombre (T_{b}-T_{BD}) et la taille T_{BD} sont tous les deux des puissances de deux. Dans ce cas, la relation (1) est remplacée par la relation (3) suivante : @_{BDCi}=@_{BDi}+@_{BDi}(T_{b}-T_{BD})/T_{BD}. La relation (2) est remplacée par la relation (4) suivante : @_{BDCi}=E(@_{Di,j}/T_{BD}).T_{BD}+E(@_{Di,j}/T_{BD})(T_{b}-T_{BD}). Dans les relations (3) et (4), les multiplications et les divisions peuvent toujours être réalisées en utilisant les registres à décalage du module 28 et donc très rapidement. Par contre, par rapport au cas où ce sont les relations (1) et (2) qui sont utilisées, il faut réaliser une opération d'addition en plus pour calculer l'adresse @_{BDCi}. Par conséquent, cette variante est un peu moins rapide que ce qui a été décrit dans le chapitre II. Par contre, elle présente l'avantage d'autoriser une taille T_{BD} qui est supérieure à la taille (T_{b}-T_{BD}), c'est-à-dire supérieure à la taille des métadonnées MDᵢ et du code MACᵢ.

Ce qui a été décrit en détail dans le cas particulier de la partie 44 de la mémoire MP, s'applique à tout autre partie de la mémoire MP contenant des données à protéger. Par exemple, cela peut aussi être appliqué à la pile 46 ou au tas 48.

Dans l'exemple détaillé de mode de réalisation, le transfert par blocs entiers entre l'ensemble 4 et le microprocesseur 2 est uniquement mis en œuvre pour les données et pas pour les instructions du code machine 30. Dans ce cas, seul le ou les espaces mémoires de l'ensemble 4 réservés pour le stockage de données sont divisés en blocs successifs de données chiffrées et authentifiées. L'espace mémoire réservé pour le stockage des instructions est alors, par exemple, utilisé de façon conventionnelle. Ainsi, dans ce mode de réalisation, les instructions sont transférées une par une vers le microprocesseur 2. De plus, dans ce cas, les instructions ne sont pas nécessairement enregistrée sous forme chiffrée dans l'ensemble 4. Toutefois, ce qui a été décrit ici dans le cas particulier des données peut aussi être appliqué aux instructions du code machine 32. Par la suite, lorsqu'un bloc contient des instructions, il est appelé "bloc d'instructions". Par exemple, comme décrit dans le cas particulier des données, la partie 42 de la mémoire MP qui contient les instructions du code machine est divisée en blocs d'instructions successifs et contigus. Par exemple, dans un premier mode de réalisation, la structure des bloc de données et des blocs d'instructions sont identiques. De plus, les fonctionnements dans le cas des blocs de données et dans le cas des blocs d'instructions sont identiques. A partir de l'enseignement donné ici dans le cas particulier des blocs de données, l'homme du métier est capable de le transposer, sans difficulté, au cas des instructions. Il est donc seulement souligné que, dans le cas des instructions, l'adresse de la prochaine instruction à charger dans le microprocesseur 2 est contenue dans le compteur ordinal 26 et non pas dans une instruction de chargement exécutée par l'unité 10. Il est également souligné que, de préférence, le tampon utilisé pour stocker un bloc d'instructions en clair est un tampon, par exemple structurellement identique au tampon 14, mais distinct du tampon 14 et dédié au stockage d'un bloc d'instruction. Enfin, il faut remarquer que dans le cas des instructions, celles-ci ne sont pas habituellement destinées à être modifiées individuellement par l'exécution d'une instruction d'écriture par le microprocesseur. Ainsi, le problème qui se pose lorsqu'une seule donnée d'un bloc de données est modifiée, ne se rencontre pas dans le cas des instructions. L'intérêt de traiter exactement de la même manière les instructions et les données est donc surtout d'harmoniser ces traitements et, par conséquent, de simplifier la réalisation du module 28 de sécurisation.

### Autres variantes :

Les différents modes de réalisation et les différentes variantes ont jusqu'à présent été décrits dans le cas particulier où la mémoire déchiffrée est le tampon 14 et la mémoire chiffrée est l'ensemble 4 de mémoire, c'est-à-dire la mémoire de rang juste supérieur. Toutefois, l'enseignement donné ici s'applique à toutes mémoires déchiffrée et chiffrée entre lesquelles des données sont transférées par bloc entier de données chiffrées et authentifiées. Par exemple, en variante, la mémoire déchiffrée est la mémoire cache L1 et la mémoire chiffrée est la mémoire cache L2. Dans ce cas, le module de sécurisation est, par exemple, implémenté dans la mémoire cache L1 pour chiffrer et déchiffrer les blocs BDCᵢ qui sont transférés entre ces deux mémoires cache L1 et L2. On notera que dans ce cas, les données sont en clair dans la mémoire cache L1 et sont chiffrées dans la mémoire cache L2. A partir du moment où les données sont chiffrées dans la mémoire cache L2, celles-ci seront nécessairement chiffrées dans les mémoires de rang supérieur. Ce qui est décrit ici peut aussi être appliqué entre les mémoires cache L2 et L3 ou entre la mémoire cache L3 et la mémoire principale MP.

Dans le cas où le module de sécurisation est seulement implémenté entre deux niveaux de mémoire supérieure au tampon 14, le tampon 14 peut être supprimé.

### Chapitre IV : Avantages des modes de réalisation décrits

Le fait d'associer à chaque bloc de Nₒ octets un indicateur IdV_{i,p} permet au module 28 de détecter que ce bloc de Nₒ octets est invalide et d'en interdire le traitement par le microprocesseur 2, et cela même si ce bloc de Nₒ octets est situé à l'intérieur d'un bloc BDCᵢ dont l'intégrité a été, au préalable, vérifiée avec succès lors de son transfert de la mémoire chiffrée vers la mémoire déchiffrée. Ainsi, le procédé d'exécution d'un programme d'ordinateur est plus robuste vis-à-vis des attaques qui cherchent à exploiter la présence d'octets qui n'ont pas encore été initialisés.

Le fait de calculer le code MACᵢ contenu dans le bloc BDCᵢ à partir des indicateurs IdV_{i,p} rend la falsification des valeurs de ces indicateurs très difficile. Cela accroît donc la sécurité du procédé d'exécution.

Le fait d'enregistrer le vecteur ivᵢ dans les métadonnées MDᵢ permet simplement d'enregistrer puis de retrouver chaque vecteur ivᵢ nécessaire pour déchiffrer le cryptogramme BDᵢ*.

Le fait que le module 28 construise lui-même l'adresse @_{BDCi} à laquelle doit être enregistré, dans la mémoire chiffrée, le bloc BDCᵢ rend l'ajout des métadonnées MDᵢ et du code MACᵢ au cryptogramme BDᵢ* transparent pour l'unité 10. En pratique, l'unité 10 fonctionne comme si toutes les données étaient en clair sans avoir à se préoccuper du chiffrement et du déchiffrement ni de la présence des métadonnées MDᵢ dans la mémoire chiffrée. En particulier, les adresses utilisées par le microprocesseur 2 pour charger ou écrire une donnée sont les mêmes que celles qui seraient utilisées dans le cas où les métadonnées MDᵢ et les codes MACᵢ n'existaient pas.

Le fait que le module 28 calcule lui-même l'adresse @_{BDCi} du bloc BDCᵢ à partir de laquelle peut être chargée une donnée D_{i,j} à accéder rend la présence des métadonnées MDᵢ et du code MACᵢ transparente pour l'unité 10. En effet, c'est le module 28 qui réalise la conversion d'adresse et non pas l'unité 10.

Le fait d'enregistrer dans la mémoire déchiffrée un bloc vierge de données en clair dont chacun des identifiants IdV_{i,p} a été basculé dans son état inactif permet l'utilisation de segment de mémoire dédié au stockage de données non-initialisées, comme par exemple le segment bss, pour y enregistrer de façon sécurisée des données qui sont initialisées seulement en cours de l'exécution du code binaire.

## Revendications

1. Procédé d'exécution d'un programme d'ordinateur par un appareil électronique comportant un microprocesseur, une mémoire déchiffrée, une mémoire chiffrée et un module matériel de sécurisation, dans lequel, lors de l'exécution du programme d'ordinateur, le transfert des données entre la mémoire déchiffrée et la mémoire chiffrée se fait par bloc entier de plusieurs données chiffrées et authentifiées, chaque donnée étant composée d'un ou plusieurs blocs de Nₒ octets, où Nₒ est égal au plus petit nombre d'octets qui peut être écrit, indépendamment des autres octets de la donnée, par le microprocesseur lorsqu'il exécute une instruction d'écriture de son jeu d'instructions machines, le procédé comportant à cet effet :
a) lors du transfert (400) d'un bloc de données en clair de la mémoire déchiffrée vers la mémoire chiffrée :
- la transformation (402) du bloc de données en clair en un bloc de données chiffrées et authentifiées, cette transformation comportant :
• le chiffrement (406) du bloc de données en clair pour obtenir un cryptogramme de ce bloc de données en clair, ce cryptogramme pouvant uniquement être déchiffré dans sa totalité et non pas donnée par donnée,
• le calcul (408) d'un code d'authentification à partir des données du bloc de données en clair ou à partir du cryptogramme de ce bloc de données en clair, et
• le regroupement, dans un même bloc, du cryptogramme obtenu, du code d'authentification calculé et de métadonnées pour obtenir le bloc de données chiffrées et authentifiées, puis
- l'enregistrement (410) du bloc de données chiffrées et authentifiées obtenu dans la mémoire chiffrée,
b) lors du transfert (300) d'un bloc de données chiffrées et authentifiées de la mémoire chiffrée vers la mémoire déchiffrée :
- la vérification (304) de l'intégrité du bloc de données en clair ou du cryptogramme du bloc de données en clair à l'aide du code d'authentification contenu dans ce bloc de données chiffrées et authentifiées,
- lorsque cette vérification échoue, l'inhibition du traitement, par le microprocesseur, des données de ce bloc de données, et
- lorsque cette vérification réussie :
• le déchiffrement (306) du cryptogramme contenu dans le bloc de données chiffrées et authentifiées pour obtenir le bloc de données en clair,
• l'enregistrement (308) du bloc de données en clair obtenu dans la mémoire déchiffrée,
**caractérisé en ce que** le procédé comporte :
- lors de l'étape b), l'enregistrement des métadonnées du bloc de données chiffrées et authentifiées dans un registre non adressable par le microprocesseur,
- l'incorporation (408) dans les métadonnées de chaque bloc de données et pour chaque bloc de Nₒ octets de chaque donnée de ce bloc de données, d'un indicateur de validité associé à ce bloc de Nₒ octets, cet indicateur de validité étant basculable entre :
• un état actif dans lequel il indique que ce bloc d'octets est valide, et
• un état inactif dans lequel il indique que ce bloc d'octets est invalide, au moins certains des indicateurs de validité étant initialement dans leur état inactif,
- lorsque le microprocesseur écrit un bloc de Nₒ octets d'une donnée du bloc de données en clair enregistré dans la mémoire déchiffrée, le module de sécurisation fait basculer (190) l'indicateur de validité associé à ce bloc de Nₒ octets dans son état actif,
- à chaque fois qu'un bloc de Nₒ octets d'une donnée du bloc de données en clair est chargé par le microprocesseur à partir de la mémoire déchiffrée, le module matériel de sécurisation vérifie (176) si l'indicateur de validité associé à ce bloc de Nₒ octets est dans son état actif et, dans l'affirmative, le traitement, par le microprocesseur, de ce bloc de Nₒ octets est autorisé (178), et, dans la négative, le traitement, par le microprocesseur, de ce bloc de Nₒ octets est interdit (180).

2. Procédé selon la revendication 1, dans lequel lors du calcul (408) du code d'authentification, le code d'authentification est également calculé à partir des indicateurs de validité associés à chaque groupe de Nₒ octets de chaque donnée du bloc de données en clair.

3. Procédé selon l'une quelconque des revendications précédentes, dans lequel :
- lors du chiffrement (406) des données en clair, les données en clair sont chiffrées en utilisant une clé cryptographique et un vecteur d'initialisation, la clé cryptographique utilisée étant la même lors de chaque transfert d'un bloc de données en clair de la mémoire déchiffrée vers la mémoire chiffrée et le vecteur d'initialisation étant modifié lors de chaque transfert d'un bloc de données en clair de la mémoire déchiffrée vers la mémoire chiffrée, et
- l'incorporation (408) dans les métadonnées du bloc de données chiffrées et authentifiées, du vecteur d'initialisation utilisé pour obtenir le cryptogramme de ce bloc de données, et
- lors du déchiffrement des données, le module matériel de sécurisation extrait (306) des métadonnées du bloc de données chiffrées et authentifiées, le vecteur d'initialisation à utiliser pour réaliser ce déchiffrement.

4. Procédé selon l'une quelconque des revendications précédentes, dans lequel chaque bloc de données chiffrées et authentifiées est enregistré (410) à une adresse @_{BDCi} égale à @_{BDi}.T_{b}/T_{BD}, où :
- @_{BDi} est l'adresse physique de début, dans la mémoire déchiffrée, du bloc de données en clair obtenu par déchiffrement du cryptogramme de ce bloc de données chiffrées et authentifiées,
- T_{b} est la taille, en nombre d'octets, du bloc de données chiffrées et authentifiées,
- T_{BD} est la taille, en nombre d'octets, du bloc de données en clair.

5. Procédé selon la revendication 4, dans lequel :
- chaque donnée est associée, par une relation biunivoque, à une adresse physique et chaque bloc de données en clair contient seulement les N_{d} données associées, par cette relation biunivoque, a des adresses physiques contenue dans une plage respective et continue de N_{d} adresses physiques consécutives et l'adresse @_{BDi} de début de ce bloc de données en clair est égale à la plus petite adresse physique de cette plage de N_{d} adresses physiques,
- lors de l'exécution du programme d'ordinateur, le microprocesseur exécute une instruction d'accès à au moins un bloc de Nₒ octets d'une première donnée associée à une adresse physique @_{Di,j}, cette première donnée n'appartenant à aucun des blocs de données en clair actuellement enregistrés dans la mémoire déchiffrée au moment de l'exécution de cette instruction d'accès,
- en réponse, le module matériel de sécurisation calcule (172) une adresse @_{BDCi} égale à E(@_{Di,j}/T_{BD}).T_{b}, où
- E() est la fonction qui retourne la partie entière du nombre situé entre les parenthèses, et
- @_{BDCi} est l'adresse de début, dans la mémoire chiffrée, du bloc de données chiffrées et authentifiées qui contient la première donnée, puis
- le bloc de données chiffrées et authentifiées qui débute à l'adresse @_{BDCi} calculée est transféré (302) de la mémoire chiffrée vers la mémoire déchiffrée de manière à enregistrer dans la mémoire déchiffrée un nouveau bloc de données en clair qui contient la première donnée, puis
- ledit au moins un bloc de Nₒ octets est accédé (178, 190) à partir de la première donnée contenue dans ce nouveau bloc de données en clair.

6. Procédé selon la revendication 5, dans lequel :
- T_{b} et T_{BD} sont tous les deux des puissances de deux et l'adresse @_{BDCi} est calculée (172) à l'aide de la première relation suivante @_{BDCi}= E(@_{Di,j}/T_{BD}).T_{b}, ou
- (T_{b}-T_{BD}) et T_{BD} sont tous les deux des puissances de deux et l'adresse @_{BDCi} est calculée à l'aide de la seconde relation suivante @_{BDCi}= E(@_{Di,j}/T_{BD}).T_{BD} + E(@_{Di,j}/T_{BD}).(T_{b}-T_{BD}), et
- chaque division et chaque multiplication des première et seconde relations sont exécutées par des registres à décalage du module matériel de sécurisation.

7. Procédé selon l'une quelconque des revendications précédentes, dans lequel, lorsque la vérification (304) de l'intégrité du bloc de données en clair ou du cryptogramme du bloc de données en clair échoue :
- un bloc vierge de données en clair est préparé (310) et enregistré dans la mémoire déchiffrée au même emplacement que celui où aurait été enregistré le bloc de données en clair si la vérification (304) de l'intégrité avait réussie, les données de ce bloc vierge étant toutes initialisées à une valeur prédéterminée, et
- les indicateurs de validité associés à chacun des blocs de Nₒ octets du bloc vierge sont basculés dans leur état inactif.

8. Code binaire (30) apte à être exécuté par un microprocesseur en mettant en œuvre un procédé conforme à l'une quelconque des revendications précédentes, dans lequel le code binaire comporte des blocs de données chiffrées et authentifiées, chaque bloc de données chiffrées et authentifiées contenant :
- un cryptogramme (BDᵢ*) d'un bloc de données en clair, ce cryptogramme pouvant uniquement être déchiffré dans sa totalité et non pas donnée par donnée,
- un code d'authentification (MACᵢ) calculé à partir des données du bloc de données en clair ou à partir du cryptogramme du bloc de données en clair,
- des métadonnées (MDᵢ),
**caractérisé en ce que** les métadonnées (MDᵢ) comporte, pour chaque bloc de Nₒ octets de chaque donnée du bloc de données en clair, un indicateur de validité (IdV_{i,p}) associé à ce bloc de Nₒ octets, cet indicateur de validité étant basculable entre :
• un état actif dans lequel il indique que ce bloc de Nₒ octets est valide, et
• un état inactif dans lequel il indique que ce bloc de Nₒ octets est invalide.

9. Module matériel (28) de sécurisation pour la mise en œuvre d'un procédé conforme à l'une quelconque des revendications 1 à 7, dans lequel le module matériel est configuré pour :
a) lors du transfert (400) d'un bloc de données en clair de la mémoire déchiffrée vers la mémoire chiffrée :
- transformer le bloc de données en clair en un bloc de données chiffrées et authentifiées, cette transformation comportant :
• le chiffrement du bloc de données en clair pour obtenir un cryptogramme de ce bloc de données en clair, ce cryptogramme pouvant uniquement être déchiffré dans sa totalité et non pas donnée par donnée,
• le calcul d'un code d'authentification à partir des données du bloc de données en clair ou à partir du cryptogramme du bloc de données en clair, et
• le regroupement, dans un même bloc, du cryptogramme obtenu, du code d'authentification calculé et de métadonnées pour obtenir le bloc de données chiffrées et authentifiées, puis
- l'enregistrement du bloc de données chiffrées et authentifiées obtenu dans la mémoire chiffrée,
b) lors du transfert d'un bloc de données chiffrées et authentifiées de la mémoire chiffrée vers la mémoire déchiffrée :
- vérifier l'intégrité du bloc de données en clair ou du cryptogramme du bloc de données en clair à l'aide du code d'authentification contenu dans ce bloc de données chiffrées et authentifiées,
- lorsque cette vérification échoue, inhiber le traitement, par le microprocesseur, des données de ce bloc de données, et
- lorsque cette vérification réussie :
• déchiffrer le cryptogramme contenu dans le bloc de données chiffrées et authentifiées pour obtenir le bloc de données en clair,
• enregistrer le bloc de données en clair obtenu dans la mémoire déchiffrée, **caractérisé en ce que** :
- lors de l'étape b), le module de sécurisation est configuré pour enregistrer les métadonnées du bloc de données chiffrées et authentifiées dans un registre non adressable par le microprocesseur,
- lorsque le microprocesseur modifie un bloc de Nₒ octets d'une donnée du bloc de données en clair enregistré dans la mémoire déchiffrée, le module de sécurisation est configuré pour faire basculer l'indicateur de validité associé à ce bloc de Nₒ octets dans son état actif, et
- à chaque fois qu'un bloc de Nₒ octets d'une donnée du bloc de données en clair est chargé par le microprocesseur à partir de la mémoire déchiffrée, le module matériel de sécurisation est configuré pour vérifier si l'indicateur de validité associé à ce bloc de Nₒ octets est dans son état actif et, dans l'affirmative, autoriser le traitement, par le microprocesseur, de ce bloc de Nₒ octets, et, dans la négative, interdire le traitement, par le microprocesseur, de ce bloc de Nₒ octets.

10. Compilateur (500) apte à transformer automatiquement un code source d'un programme d'ordinateur en un code binaire de ce programme d'ordinateur, **caractérisé en ce que** le compilateur est apte à transformer automatiquement le code source en un code binaire conforme à la revendication 8, ce compilateur étant configuré à cet effet pour transformer automatiquement des blocs de données en clair en blocs de données chiffrées et authentifiées, pour cela ce compilateur est apte, pour chaque bloc de données en clair, :
- à chiffrer le bloc de données en clair pour obtenir un cryptogramme de ce bloc de données en clair, ce cryptogramme pouvant uniquement être déchiffré dans sa totalité et non pas donnée par donnée,
- à calculer un code d'authentification à partir des données du bloc de données en clair ou à partir du cryptogramme de ce bloc de données en clair, et
- à regrouper, dans un même bloc, le cryptogramme obtenu, le code d'authentification calculé et les métadonnées pour obtenir le bloc de données chiffrées et authentifiées,
**caractérisé en ce que** le compilateur (500) est également configuré pour incorporer dans les métadonnées de chaque bloc de données et pour chaque bloc de Nₒ octets de chaque donnée de ce bloc de données, un indicateur de validité associé à ce bloc de Nₒ octets, cet indicateur de validité étant basculable entre :
• un état actif dans lequel il indique que ce bloc d'octets est valide, et
• un état inactif dans lequel il indique que ce bloc d'octets est invalide,
au moins certains des indicateurs de validité étant initialement dans leur état inactif.

## Patentansprüche

1. Verfahren zur Ausführung eines Computerprogramms durch ein elektronisches Gerät, das einen Mikroprozessor, einen entschlüsselten Speicher, einen verschlüsselten Speicher und ein Hardware-Sicherungsmodul umfasst, wobei während der Ausführung des Computerprogramms die Übertragung der Datenelemente zwischen dem entschlüsselten Speicher und dem verschlüsselten Speicher pro ganzem Block mit mehreren verschlüsselten und authentifizierten Datenelementen erfolgt, wobei jedes Datenelement aus einem oder mehreren Blöcken mit Nₒ Bytes besteht, wobei Nₒ gleich der kleinsten Anzahl von Bytes ist, die unabhängig von den anderen Bytes des Datenelements von dem Mikroprozessor geschrieben werden kann, wenn dieser einen Schreibbefehl seines Satzes Maschinenbefehle ausführt, wobei das Verfahren zu diesem Zweck Folgendes umfasst:
a) während der Übertragung (400) eines Blocks mit Datenelementen im Klartext von dem entschlüsselten Speicher zu dem verschlüsselten Speicher:
- Umwandeln (402) des Blocks mit Datenelementen im Klartext in einen Block mit verschlüsselten und authentifizierten Datenelementen, wobei diese Umwandlung Folgendes umfasst:
• Verschlüsseln (406) des Blocks mit Datenelementen im Klartext, um ein Kryptogramm dieses Blocks mit Datenelementen im Klartext zu erhalten, wobei dieses Kryptogramm nur in seiner Gesamtheit und nicht für jedes Datenelement separat entschlüsselt werden kann,
• Berechnen (408) eines Authentifizierungscodes anhand der Datenelemente des Blocks mit Datenelementen im Klartext oder anhand des Kryptogramms dieses Blocks mit Datenelementen im Klartext und
• Umgruppieren, in einem gleichen Block, des erhaltenen Kryptogramms, des berechneten Authentifizierungscodes und von Metadaten, um den Block mit verschlüsselten und authentifizierten Datenelementen zu erhalten, dann
- Speichern (410) des erhaltenen Blocks mit verschlüsselten und authentifizierten Datenelementen in dem verschlüsselten Speicher,
b) während der Übertragung (300) eines Blocks mit verschlüsselten und authentifizierten Datenelementen von dem verschlüsselten Speicher zu dem entschlüsselten Speicher:
- Überprüfen (304) der Integrität des Blocks mit Datenelementen im Klartext oder des Kryptogramms des Blocks mit Datenelementen im Klartext mit Hilfe des Authentifizierungscodes, der in diesem Block mit verschlüsselten und authentifizierten Datenelementen enthalten ist,
- wenn diese Überprüfung fehlschlägt, Verhindern der Verarbeitung, durch den Mikroprozessor, der Datenelemente dieses Blocks mit Datenelementen, und
- wenn diese Überprüfung erfolgreich ist:
• Entschlüsseln (306) des Kryptogramms, das in dem Block mit verschlüsselten und authentifizierten Datenelementen enthalten ist, um den Block mit Datenelementen im Klartext zu erhalten,
• Speichern (308) des erhaltenen Blocks mit Datenelementen im Klartext in dem entschlüsselten Speicher,
**dadurch gekennzeichnet, dass** das Verfahren Folgendes umfasst:
- während des Schritts b), Speichern der Metadaten des Blocks mit verschlüsselten und authentifizierten Datenelementen in einem Register, das durch den Mikroprozessor nicht adressierbar ist,
- Einfügen (408), in die Metadaten jedes Blocks mit Datenelementen und für jeden Block mit Nₒ Bytes jedes Datenelements dieses Blocks mit Datenelementen, eines Gültigkeitsindikators, der diesem Block mit Nₒ Bytes zugeordnet ist, wobei dieser Gültigkeitsindikator zwischen Folgendem umschaltbar ist:
• einem aktiven Zustand, in dem er angibt, dass dieser Block mit Bytes gültig ist, und
• einem inaktiven Zustand, in dem er angibt, dass dieser Block mit Bytes ungültig ist,
wobei sich mindestens einige der Gültigkeitsindikatoren anfänglich in ihrem inaktiven Zustand befinden,
- wobei, wenn der Mikroprozessor einen Block mit Nₒ Bytes eines Datenelements des Blocks mit Datenelementen im Klartext, der in dem entschlüsselten Speicher gespeichert ist, schreibt, das Sicherungsmodul den diesem Block mit Nₒ Bytes zugeordneten Gültigkeitsindikator in seinen aktiven Zustand umschaltet (190),
- wobei jedes Mal, wenn ein Block mit Nₒ Bytes eines Datenelements des Blocks mit Datenelementen im Klartext durch den Mikroprozessor aus dem entschlüsselten Speicher geladen wird, das Hardware-Sicherungsmodul überprüft (176), ob sich der diesem Block mit Nₒ Bytes zugeordnete Gültigkeitsindikator in seinem aktiven Zustand befindet, und falls ja, die Verarbeitung, durch den Mikroprozessor, dieses Blocks mit Nₒ Bytes genehmigt wird (178), und falls nein, die Verarbeitung, durch den Mikroprozessor, dieses Blocks mit Nₒ Bytes untersagt wird (180).

2. Verfahren nach Anspruch 1, wobei während des Berechnens (408) des Authentifizierungscodes der Authentifizierungscode ebenfalls anhand der Gültigkeitsindikatoren, die jeder Gruppe mit Nₒ Bytes jedes Datenelements des Blocks mit Datenelementen im Klartext zugeordnet sind, berechnet wird.

3. Verfahren nach einem der vorhergehenden Ansprüche, wobei:
- während der Verschlüsselung (406) der Datenelemente im Klartext die Datenelemente im Klartext unter Verwendung eines kryptographischen Schlüssels und eines Initialisierungsvektors verschlüsselt werden, wobei der verwendete kryptographische Schlüssel bei jeder Übertragung eines Blocks mit Datenelementen im Klartext von dem entschlüsselten Speicher zu dem verschlüsselten Speicher der gleiche ist und der Initialisierungsvektor bei jeder Übertragung eines Blocks mit Datenelementen im Klartext von dem entschlüsselten Speicher zu dem verschlüsselten Speicher modifiziert wird, und
- Einfügen (408), in die Metadaten des Blocks mit verschlüsselten und authentifizierten Datenelementen, des verwendeten Initialisierungsvektors, um das Kryptogramm dieses Blocks mit Datenelementen zu erhalten, und
- während der Entschlüsselung der Datenelemente das Hardware-Sicherungsmodul den zur Durchführung dieser Entschlüsselung zu verwendenden Initialisierungsvektor aus den Metadaten des Blocks mit verschlüsselten und authentifizierten Datenelementen extrahiert (306).

4. Verfahren nach einem der vorhergehenden Ansprüche, wobei jeder Block mit verschlüsselten und authentifizierten Datenelementen unter einer Adresse @_{BDCi} gespeichert (410) ist, die gleich @_{BDi}.T_{b}/T_{BD} ist, wobei:
- @_{BDi} die physische Startadresse, in dem entschlüsselten Speicher, des Blocks mit Datenelementen im Klartext ist, der durch die Entschlüsselung des Kryptogramms dieses Blocks mit verschlüsselten und authentifizierten Datenelementen erhalten wurde,
- T_{b} die Größe, in Anzahl Bytes, des Blocks mit verschlüsselten und authentifizierten Datenelementen ist,
- T_{BD} die Größe, in Anzahl Bytes, des Blocks mit Datenelementen im Klartext ist.

5. Verfahren nach Anspruch 4, wobei:
- jedes Datenelement durch eine eineindeutige Beziehung einer physischen Adresse zugeordnet ist und jeder Block mit Datenelementen im Klartext nur die N_{d} Datenelemente enthält, die durch diese eineindeutige Beziehung physischen Adressen zugeordnet sind, die in einem jeweiligen und kontinuierlichen Bereich mit N_{d} physischen Adressen enthalten sind, und die Startdresse @_{BDi} dieses Blocks mit Datenelementen im Klartext gleich der kleinsten physischen Adresse dieses Bereichs mit N_{d} physischen Adressen ist,
- der Mikroprozessor während der Ausführung des Computerprogramms einen Zugriffsbefehl auf mindestens einen Block mit Nₒ Bytes eines ersten Datenelements, das einer physischen Adresse @_{Di,j} zugeordnet ist, ausführt, wobei dieses erste Datenelement zu keinem der Blöcke mit Datenelementen im Klartext gehört, die aktuell zum Zeitpunkt der Ausführung dieses Zugriffsbefehls in dem entschlüsselten Speicher gespeichert sind,
- als Reaktion darauf das Hardware-Sicherungsmodul eine Adresse @_{BDCi} berechnet (172), die gleich E(@_{Di,j}/T_{BD}).T_{b} ist, wobei
- E() die Funktion ist, die den ganzzahligen Teil der in den Klammern befindlichen Zahl liefert, und
- @_{BDCi} die Startadresse, in dem verschlüsselten Speicher, des Blocks mit verschlüsselten und authentifizierten Datenelementen ist, der das erste Datenelement enthält, dann
- der Block mit verschlüsselten und authentifizierten Datenelementen, der an der berechneten Adresse @_{BDCi} startet, von dem verschlüsselten Speicher zu dem entschlüsselten Speicher übertragen (302) wird, um in dem entschlüsselten Speicher einen neuen Block mit Datenelementen im Klartext zu speichern, der das erste Datenelement enthält, dann
- auf den mindestens einen Block mit Nₒ Bytes ausgehend von dem ersten Datenelement, das in diesem neuen Block mit Datenelementen im Klartext enthalten ist, zugegriffen (178, 190) wird.

6. Verfahren nach Anspruch 5, wobei:
- T_{b} und T_{BD} beide Potenzen von zwei sind und die Adresse @_{BDCi} mit Hilfe der folgenden ersten Gleichung @_{BDCi} = E(@_{Di,j}/T_{BD}).T_{b} berechnet (172) wird, oder
- (T_{b}-T_{BD}) und T_{BD} beide Potenzen von zwei sind und die Adresse @_{BDCi} mit Hilfe der folgenden zweiten Gleichung @_{BDCi} = E(@_{Di,j}/T_{BD}).T_{BD} + E(@_{Di,j}/T_{BD}).(T_{b}-T_{BD}) berechnet wird, und
- jede Division und jede Multiplikation der ersten und der zweiten Gleichung von Schieberegistern des Hardware-Sicherungsmoduls ausgeführt wird.

7. Verfahren nach einem der vorhergehenden Ansprüche, wobei, wenn die Überprüfung (304) der Integrität des Blocks mit Datenelementen im Klartext oder des Kryptogramms des Blocks mit Datenelementen im Klartext fehlschlägt:
- ein jungfräulicher Block mit Datenelementen im Klartext vorbereitet (310) und in dem entschlüsselten Speicher an derselben Stelle gespeichert wird, an welcher der Block mit Datenelementen im Klartext im Falle einer erfolgreichen Überprüfung (304) der Integrität gespeichert worden wäre, wobei die Datenelemente dieses jungfräulichen Blocks alle auf einen vorgegebenen Wert initialisiert sind, und
- die Gültigkeitsindikatoren, die jedem der Blöcke mit Nₒ Bytes des jungfräulichen Blocks zugeordnet sind, in ihren inaktiven Zustand umgeschaltet werden.

8. Binärcode (30), der dazu fähig ist, von einem Mikroprozessor ausgeführt zu werden, indem ein Verfahren nach einem der vorhergehenden Ansprüche umgesetzt wird, wobei der Binärcode Blöcke mit verschlüsselten und authentifizierten Datenelementen umfasst, wobei jeder Block mit verschlüsselten und authentifizierten Datenelementen Folgendes enthält:
- ein Kryptogramm (BDᵢ*) eines Blocks mit Datenelementen im Klartext, wobei dieses Kryptogramm nur in seiner Gesamtheit und nicht für jedes Datenelement separat entschlüsselt werden kann,
- einen Authentifizierungscode (MACᵢ), der anhand der Datenelemente des Blocks mit Datenelementen im Klartext oder anhand des Kryptogramms des Blocks mit Datenelementen im Klartext berechnet wurde,
- Metadaten (MDᵢ),
**dadurch gekennzeichnet, dass** die Metadaten (MDᵢ) für jeden Block mit Nₒ Bytes jedes Datenelements des Blocks mit Datenelementen im Klartext einen Gültigkeitsindikator (IdV_{i,p}), der diesem Block mit Nₒ Bytes zugeordnet ist, umfassen, wobei dieser Gültigkeitsindikator zwischen Folgendem umschaltbar ist:
• einem aktiven Zustand, in dem er angibt, dass dieser Block mit Nₒ Bytes gültig ist, und
• einem inaktiven Zustand, in dem er angibt, dass dieser Block mit Nₒ Bytes ungültig ist.

9. Hardware-Sicherungsmodul (28) zur Umsetzung eines Verfahrens nach einem der Ansprüche 1 bis 7, wobei das Hardware-Modul zu Folgendem konfiguriert ist:
a) während der Übertragung (400) eines Blocks mit Datenelementen im Klartext von dem entschlüsselten Speicher zu dem verschlüsselten Speicher:
- Umwandeln des Blocks mit Datenelementen im Klartext in einen Block mit verschlüsselten und authentifizierten Datenelementen, wobei diese Umwandlung Folgendes umfasst:
• Verschlüsseln des Blocks mit Datenelementen im Klartext, um ein Kryptogramm dieses Blocks mit Datenelementen im Klartext zu erhalten, wobei dieses Kryptogramm nur in seiner Gesamtheit und nicht für jedes Datenelement separat entschlüsselt werden kann,
• Berechnen eines Authentifizierungscodes anhand der Datenelemente des Blocks mit Datenelementen im Klartext oder anhand des Kryptogramms des Blocks mit Datenelementen im Klartext und
• Umgruppieren, in einem gleichen Block, des erhaltenen Kryptogramms, des berechneten Authentifizierungscodes und von Metadaten, um den Block mit verschlüsselten und authentifizierten Datenelementen zu erhalten, dann
- Speichern des erhaltenen Blocks mit verschlüsselten und authentifizierten Datenelementen in dem verschlüsselten Speicher,
b) während der Übertragung eines Blocks mit verschlüsselten und authentifizierten Datenelementen von dem verschlüsselten Speicher zu dem entschlüsselten Speicher:
- Überprüfen der Integrität des Blocks mit Datenelementen im Klartext oder des Kryptogramms des Blocks mit Datenelementen im Klartext mit Hilfe des Authentifizierungscodes, der in diesem Block mit verschlüsselten und authentifizierten Datenelementen enthalten ist,
- wenn diese Überprüfung fehlschlägt, Verhindern der Verarbeitung, durch den Mikroprozessor, der Datenelemente dieses Blocks mit Datenelementen, und
- wenn diese Überprüfung erfolgreich ist:
• Entschlüsseln des Kryptogramms, das in dem Block mit verschlüsselten und authentifizierten Datenelementen enthalten ist, um den Block mit Datenelementen im Klartext zu erhalten,
• Speichern des erhaltenen Blocks mit Datenelementen im Klartext in dem entschlüsselten Speicher,
**dadurch gekennzeichnet, dass**:
- während des Schritts b) das Sicherungsmodul dazu konfiguriert ist, die Metadaten des Blocks mit verschlüsselten und authentifizierten Datenelementen in einem Register, das durch den Mikroprozessor nicht adressierbar ist, zu speichern,
- wenn der Mikroprozessor einen Block mit Nₒ Bytes eines Datenelements des Blocks mit Datenelementen im Klartext, der in dem entschlüsselten Speicher gespeichert ist, modifiziert, das Sicherungsmodul dazu konfiguriert ist, den diesem Block mit Nₒ Bytes zugeordneten Gültigkeitsindikator in seinen aktiven Zustand umzuschalten, und
- jedes Mal, wenn ein Block mit Nₒ Bytes eines Datenelements des Blocks mit Datenelementen im Klartext durch den Mikroprozessor aus dem entschlüsselten Speicher geladen wird, das Hardware-Sicherungsmodul dazu konfiguriert ist, zu überprüfen, ob sich der diesem Block mit Nₒ Bytes zugeordnete Gültigkeitsindikator in seinem aktiven Zustand befindet, und falls ja, die Verarbeitung, durch den Mikroprozessor, dieses Blocks mit Nₒ Bytes zu genehmigen, und falls nein, die Verarbeitung, durch den Mikroprozessor, dieses Blocks mit Nₒ Bytes zu untersagen.

10. Compiler (500), der dazu fähig ist, einen Quellcode eines Computerprogramms automatisch in einen Binärcode dieses Computerprogramms umzuwandeln, **dadurch gekennzeichnet, dass** der Compiler dazu fähig ist, den Quellcode automatisch in einen Binärcode nach Anspruch 8 umzuwandeln, wobei dieser Compiler zu diesem Zweck dazu konfiguriert ist, Blöcke mit Datenelementen im Klartext automatisch in Blöcke mit verschlüsselten und authentifizierten Datenelementen umzuwandeln, wobei hierzu dieser Compiler für jeden Block mit Datenelementen im Klartext zu Folgendem fähig ist:
- Verschlüsseln des Blocks mit Datenelementen im Klartext, um ein Kryptogramm dieses Blocks mit Datenelementen im Klartext zu erhalten, wobei dieses Kryptogramm nur in seiner Gesamtheit und nicht für jedes Datenelement separat entschlüsselt werden kann,
- Berechnen eines Authentifizierungscodes anhand der Datenelemente des Blocks mit Datenelementen im Klartext oder anhand des Kryptogramms dieses Blocks mit Datenelementen im Klartext und
- Umgruppieren, in einem gleichen Block, des erhaltenen Kryptogramms, des berechneten Authentifizierungscodes und der Metadaten, um den Block mit verschlüsselten und authentifizierten Datenelementen zu erhalten,
**dadurch gekennzeichnet, dass** der Compiler (500) ferner dazu konfiguriert ist, in die Metadaten jedes Blocks mit Datenelementen und für jeden Block mit Nₒ Bytes jedes Datenelements dieses Blocks mit Datenelementen einen Gültigkeitsindikator einzufügen, der diesem Block mit Nₒ Bytes zugeordnet ist, wobei dieser Gültigkeitsindikator zwischen Folgendem umschaltbar ist:
• einem aktiven Zustand, in dem er angibt, dass dieser Block mit Bytes gültig ist, und
• einem inaktiven Zustand, in dem er angibt, dass dieser Block mit Bytes ungültig ist,
wobei sich mindestens einige der Gültigkeitsindikatoren anfänglich in ihrem inaktiven Zustand befinden.

## Claims

1. Method for executing a computer program by means of an electronic apparatus comprising a microprocessor, an unencrypted memory, an encrypted memory and a hardware security module, wherein, during the execution of the computer program, the transfer of data between the unencrypted memory and the encrypted memory is carried out in entire blocks of a plurality of encrypted and authenticated data, each datum being composed of one or more blocks of Nₒ bytes, where Nₒ is equal to the lowest number of bytes that can be written, independently of the other bytes of the datum, by the microprocessor when it executes a write instruction of its instruction set architecture, the method comprising, to this end:
a) during the transfer (400) of a block of cleartext data from the unencrypted memory to the encrypted memory:
- converting (402) the block of cleartext data into a block of encrypted and authenticated data, this conversion comprising:
• encrypting (406) the block of cleartext data to obtain a cryptogram of this block of cleartext data, this cryptogram being able to be decrypted solely in its entirety and not datum by datum,
• computing (408) an authentication code using the data of the block of cleartext data or using the cryptogram of this block of cleartext data, and
• grouping, in the same block, the obtained cryptogram, the computed authentication code and metadata to obtain the block of encrypted and authenticated data, then
- storing (410) the obtained block of encrypted and authenticated data in the encrypted memory,
b) during the transfer (300) of a block of encrypted and authenticated data from the encrypted memory to the unencrypted memory:
- verifying (304) the integrity of the block of cleartext data or of the cryptogram of the block of cleartext data using the authentication code contained in this block of encrypted and authenticated data,
- when this verification fails, inhibiting processing, by the microprocessor, of the data of this block of data, and
- when this verification succeeds:
• decrypting (306) the cryptogram contained in the block of encrypted and authenticated data to obtain the block of cleartext data,
• storing (308) the obtained block of cleartext data in the unencrypted memory, **characterized in that** the method comprises:
- in step b), storing the metadata of the block of encrypted and authenticated data in a register that is not addressable by the microprocessor,
- incorporating (408), into the metadata of each block of data and for each block of Nₒ bytes of each datum of this block of data, a validity indicator associated with this block of Nₒ bytes, this validity indicator being switchable between:
• an active state, in which it indicates that this block of bytes is valid, and
• an inactive state, in which it indicates that this block of bytes is invalid, at least certain of the validity indicators initially being in their inactive state,
- when the microprocessor writes a block of Nₒ bytes of a datum of the block of cleartext data stored in the unencrypted memory, the security module switches (190) the validity indicator associated with this block of Nₒ bytes to its active state,
- each time a block of Nₒ bytes of a datum of the block of cleartext data is loaded by the microprocessor from the unencrypted memory, the hardware security module verifies (176) whether the validity indicator associated with this block of Nₒ bytes is in its active state and, if such is the case, processing, by the microprocessor, of this block of Nₒ bytes is permitted (178), and, if such is not the case, processing, by the microprocessor, of this block of Nₒ bytes is forbidden (180).

2. Method according to Claim 1, wherein, during the computation (408) of the authentication code, the authentication code is also computed using validity indicators associated with each group of Nₒ bytes of each datum of the block of cleartext data.

3. Method according to any one of the preceding claims, wherein:
- during the encryption (406) of the cleartext data, the cleartext data are encrypted using a cryptographic key and an initialization vector, the cryptographic key used being the same on each transfer of a block of cleartext data from the unencrypted memory to the encrypted memory and the initialization vector being modified on each transfer of a block of cleartext data from the unencrypted memory to the encrypted memory, and
- the initialization vector used to obtain the cryptogram of this block of data is incorporated (408) into the metadata of the block of encrypted and authenticated data, and
- during the decryption of the data, the hardware security module extracts (306) from the metadata of the block of encrypted and authenticated data, the initialization vector to be used to carry out this decryption.

4. Method according to any one of the preceding claims, wherein each block of encrypted and authenticated data is stored (410) at an address @_{BDCi} equal to @_{BDi}.T_{b}/T_{BD}, where:
- @_{BDi} is the physical address of the start, in the unencrypted memory, of the block of cleartext data obtained by decrypting the cryptogram of this block of encrypted and authenticated data,
- T_{b} is the size, in number of bytes, of the block of encrypted and authenticated data,
- T_{BD} is the size, in number of bytes, of the block of cleartext data.

5. Method according to Claim 4, wherein:
- each datum is associated, via a one-to-one relationship, with one physical address and each block of cleartext data contains only the N_{d} data associated, via this one-to-one relationship, with physical addresses contained in a respective and continuous range of N_{d} consecutive physical addresses, and the address @_{BDi} of the start of this block of cleartext data is equal to the lowest physical address of this range of N_{d} physical addresses,
- during the execution of the computer program, the microprocessor executes an instruction to access at least one block of Nₒ bytes of a first datum associated with a physical address @_{Di,j}, this first datum belonging to none of the blocks of cleartext data currently stored in the unencrypted memory at the moment of the execution of this access instruction,
- in response, the hardware security module computes (172) an address @_{BDCi} equal to E(@_{Di,j}/T_{BD}).T_{b}, where
- E() is the function that returns the integer part of the number located between the parentheses, and
- @_{BDCi} is the address of the start, in the encrypted memory, of the block of encrypted and authenticated data that contains the first datum, then
- the block of encrypted and authenticated data that starts at the computed address @_{BDCi} is transferred (302) from the encrypted memory to the unencrypted memory so as to store, in the unencrypted memory, a new block of cleartext data that contains the first datum, then
- said at least one block of Nₒ bytes is accessed (178, 190) using the first datum contained in this new block of cleartext data.

6. Method according to Claim 5, wherein:
- T_{b} and T_{BD} are both powers of two and the address @_{BDCi} is computed (172) using the following first relationship @_{BDCi}= E(@_{Di,j}/T_{BD}).T_{b}, or
- (T_{b}-T_{BD}) and T_{BD} are both powers of two and the address @_{BDCi} is computed using the following second relationship @_{BDCi}= E(@_{Di,j}/T_{BD}).T_{BD} + E(@_{Di,j}/T_{BD}).(T_{b}-T_{BD}), and
- each division and each multiplication of the first and second relationships are executed by shift registers of the hardware security module.

7. Method according to any one of the preceding claims, wherein, when the verification (304) of the integrity of the block of cleartext data or of the cryptogram of the block of cleartext data fails:
- a virgin block of cleartext data is prepared (310) and stored in the unencrypted memory in the same location as that where the block of cleartext data would have been stored if the verification (304) of the integrity had succeeded, the data of this virgin block all being initialized to a preset value, and
- the validity indicators associated with each of the blocks of Nₒ bytes of the virgin block are switched to their inactive state.

8. Binary code (30) able to be executed by a microprocessor by implementing a method according to any one of the preceding claims, wherein the binary code comprises blocks of encrypted and authenticated data, each block of encrypted and authenticated data containing:
- a cryptogram (BDᵢ*) of a block of cleartext data, this cryptogram being able to be decrypted solely in its entirety and not datum by datum,
- an authentication code (MACᵢ) computed using the data of the block of cleartext data or using the cryptogram of the block of cleartext data,
- metadata (MDᵢ),
**characterized in that** the metadata (MDᵢ) comprise, for each block of Nₒ bytes of each datum of the block of cleartext data, a validity indicator (IdV_{i,p}) associated with this block of Nₒ bytes, this validity indicator being switchable between:
• an active state, in which it indicates that this block of Nₒ bytes is valid, and
• an inactive state, in which it indicates that this block of Nₒ bytes is invalid.

9. Hardware security module (28) for implementing a method according to any one of Claims 1 to 7, wherein the hardware module is configured to:
a) during the transfer (400) of a block of cleartext data from the unencrypted memory to the encrypted memory:
- convert the block of cleartext data into a block of encrypted and authenticated data, this conversion comprising:
• encrypting the block of cleartext data to obtain a cryptogram of this block of cleartext data, this cryptogram being able to be decrypted solely in its entirety and not datum by datum,
• computing an authentication code using the data of the block of cleartext data or using the cryptogram of the block of cleartext data, and
• grouping, in the same block, the obtained cryptogram, the computed authentication code and metadata to obtain the block of encrypted and authenticated data, then
- store the obtained block of encrypted and authenticated data in the encrypted memory,
b) during the transfer of a block of encrypted and authenticated data from the encrypted memory to the unencrypted memory:
- verify the integrity of the block of cleartext data or of the cryptogram of the block of cleartext data using the authentication code contained in this block of encrypted and authenticated data,
- when this verification fails, inhibit processing, by the microprocessor, of the data of this block of data, and
- when this verification succeeds:
• decrypt the cryptogram contained in the block of encrypted and authenticated data to obtain the block of cleartext data,
• store the obtained block of cleartext data in the unencrypted memory, **characterized in that**:
- in step b), the security module is configured to store the metadata of the block of encrypted and authenticated data in a register that is not addressable by the microprocessor,
- when the microprocessor modifies a block of Nₒ bytes of a datum of the block of cleartext data stored in the unencrypted memory, the security module is configured to switch the validity indicator associated with this block of Nₒ bytes to its active state, and
- each time a block of Nₒ bytes of a datum of the block of cleartext data is loaded by the microprocessor from the unencrypted memory, the hardware security module is configured to verify whether the validity indicator associated with this block of Nₒ bytes is in its active state and, if such is the case, processing, by the microprocessor, of this block of Nₒ bytes is permitted, and, if such is not the case, processing, by the microprocessor, of this block of Nₒ bytes is forbidden.

10. Compiler (500) able to automatically convert a source code of a computer program into a binary code of this computer program, **characterized in that** the compiler is able to automatically convert the source code into a binary code according to Claim 8, this compiler being configured to this end to automatically convert blocks of cleartext data into blocks of encrypted and authenticated data, and, to do this, this compiler is able, for each block of cleartext data:
- to encrypt the block of cleartext data to obtain a cryptogram of this block of cleartext data, this cryptogram being able to be decrypted solely in its entirety and not datum by datum,
- to compute an authentication code using the data of the block of cleartext data or using the cryptogram of this block of cleartext data, and
- to group, in the same block, the obtained cryptogram, the computed authentication code and metadata to obtain the block of encrypted and authenticated data, **characterized in that** the compiler (500) is also configured to incorporate, into the metadata of each block of data and for each block of Nₒ bytes of each datum of this block of data, a validity indicator associated with this block of Nₒ bytes, this validity indicator being switchable between:
• an active state, in which it indicates that this block of bytes is valid, and
• an inactive state, in which it indicates that this block of bytes is invalid, at least certain of the validity indicators initially being in their inactive state.
